(19) Europäisches Patentamt
European Patent Office
Office européen des brevets

(11) EP 4 768 265 A1

(12) EUROPEAN PATENT APPLICATION
published in accordance with Art. 153(4) EPC

(43) Date of publication:
01.07.2026 Bulletin 2026/27

(51) International Patent Classification (IPC):
B41M 5/00 (2006.01)     B41J 2/01 (2006.01)
B41J 2/21 (2006.01)     C09D 11/34 (2014.01)

(21) Application number: 24856500.4

(22) Date of filing: 22.08.2024

(52) Cooperative Patent Classification (CPC):
B41J 2/01; B41J 2/21; B41M 5/00; C09D 11/32;
C09D 11/34; C09D 11/54

(86) International application number:
PCT/JP2024/029746

(87) International publication number:
WO 2025/041812 (27.02.2025 Gazette 2025/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.08.2023 JP 2023135720

(71) Applicant: Kao Corporation
Tokyo 103-8210 (JP)

(72) Inventors:
• KAWAGUCHI, Hiroki
Tokyo 103-8210 (JP)
• YOSHIKAWA, Takahiro
Tokyo 103-8210 (JP)

(74) Representative: Hoffmann Eitle
Patent- und Rechtsanwälte PartmbB
Arabellastraße 30
81925 München (DE)

(54) INKJET PRINTING METHOD

(57) Provided is an inkjet printing method for forming, on a printing medium, a printed image containing a dark image forming region and a light image forming region, wherein a printing duty of a colorant-containing ink in the dark image forming region is larger than that in the light image forming region, including: Step 1: a step of applying a pretreatment liquid to an outer edge portion of a region to be the dark image forming region, thereby obtaining a printing medium having a pretreatment liquid applied portion; and Step 2: a step of applying, using a line-head type inkjet method, the colorant-containing ink to the region to be the dark image forming region on a face having the pretreatment liquid applied portion of the printing medium obtained in Step 1.

FIG. 1

## Description

Technical Field

The present invention relates to an inkjet printing method.

Background Art

Inkjet printing offers numerous advantages, including the elimination of the need for plate-making, easy handling of variable (dynamic) data, and non-contact interaction with a printing medium during printing on the printing medium. As a result, in addition to office and home use, inkjet printing has recently been expanding into commercial printing applications where the volume of printed materials is significantly higher.

In commercial printing applications, improvement in the image quality is required for printing on non-absorbency printing media, such as resin films, in addition to low-absorbency printing media such as text paper. Consequently, various proposals have been made.

For example, JP 2018-126972A (Patent Document 1) describes, in order to provide an image forming apparatus that can suppress bleeding between an image region and a non-image region and achieve an image with a high image density, an image forming apparatus including: a recording medium; an ink containing a color material, an organic solvent, and water; a liquid containing an organic solvent and water but not containing a color material; a means for applying the ink to the recording medium to form an image region; and a means for applying the liquid to a non-image region other than the image region on the recording medium, wherein a static surface tension $\gamma_A$ at 25°C of the ink and a static surface tension $\gamma_B$ at 25°C of the liquid satisfy a specific relationship, and the liquid is not applied to the image region.

Furthermore, JP 2009-196274A (Patent Document 2) describes, in order to prevent color ink bleeding regardless of the type of recording medium used, such as those with excellent ink absorption capacity or those with poor ink absorption capacity, an inkjet recording method for performing recording on a recording medium using a color ink that contains a color material, wherein a clear ink that does not contain any color materials and whose dynamic surface tension at life time of 100 milliseconds and static surface tension are lower than those of the color ink is recorded on an edge portion of a recording region that is recorded by the color ink.

Summary of Invention

The present invention relates to an inkjet printing method for forming, on a printing medium, a printed image containing a dark image forming region and a light image forming region, wherein a printing duty of a colorant-containing ink in the dark image forming region is larger than that in the light image forming region, including:

Step 1: a step of applying a pretreatment liquid to an outer edge portion of a region to be the dark image forming region, thereby obtaining a printing medium having a pretreatment liquid applied portion; and
Step 2: a step of applying, using a line-head type inkjet method, the colorant-containing ink to the region to be the dark image forming region on a face having the pretreatment liquid applied portion of the printing medium obtained in Step 1.

Description of the Invention

In commercial printing applications, high productivity is required, and thus high-speed printing is performed. In order to accommodate this high-speed printing, line-head type print heads have been developed. Unlike conventional serial-head type print heads, which print by moving the head (nozzles) a plurality of times, line-head type print heads are equipped with a head capable of inkjet printing across a width greater than or equal to the length in a direction that is perpendicular to the printing medium's conveying direction, and thus they can perform high-speed printing by moving only the printing medium while keeping the print head stationary. On the other hand, unlike serial-head type printing, line-head type inkjet printing cannot perform printing while moving the head back and forth in the print region a plurality of times, and thus it cannot compensate for ink landing misalignment caused by ejection skew, making streaks (lines) prone to occur. In printing that forms a printed image containing a dark image forming region and a light image forming region on a low-absorbency printing medium, bleeding occurs at the boundary between the dark image forming region and the light image forming region, resulting in an unclear printed image. However, the technologies described in Patent Documents 1 and 2 do not sufficiently address these issues, and there is a need for the development of a technology that suppresses the streak occurrence and achieves excellent clarity of a printed image containing a dark image forming region and a light image forming region, in particular excellent sharpness of a printed image of knockout text, even in line-head type inkjet printing using a low-absorbency printing medium, specifically resin films.

The present invention relates to an inkjet printing method that suppresses the streak occurrence in the obtained printed material and achieves excellent clarity of a printed image containing a dark image forming region and a light image forming region, even in line-head type inkjet printing using a low-absorbency printing medium.

The inventors of the present invention found that the above-described issues can be addressed by an inkjet printing method for forming, on a printing medium, a printed image containing a dark image forming region and a light image forming region, including: a step of applying a pretreatment liquid to an outer edge portion of a region to be the dark image forming region, thereby obtaining a printing medium having a pretreatment liquid applied portion; and a step of applying, using a line-head type inkjet method, a colorant-containing ink to the region to be the dark image forming region on a face having the pretreatment liquid applied portion of the printing medium obtained in the step.

That is to say, the present invention provides an inkjet printing method for forming, on a printing medium, a printed image containing a dark image forming region and a light image forming region, wherein a printing duty of a colorant-containing ink in the dark image forming region is larger than that in the light image forming region, including:

Step 1: a step of applying a pretreatment liquid to an outer edge portion of a region to be the dark image forming region, thereby obtaining a printing medium having a pretreatment liquid applied portion; and
Step 2: a step of applying, using a line-head type inkjet method, the colorant-containing ink to the region to be the dark image forming region on a face having the pretreatment liquid applied portion of the printing medium obtained in Step 1.

The present invention can provide an inkjet printing method that suppresses the streak occurrence in the obtained printed material and achieves excellent clarity of a printed image containing a dark image forming region and a light image forming region, even in line-head type inkjet printing using a low-absorbency printing medium.

Brief Description of Drawing

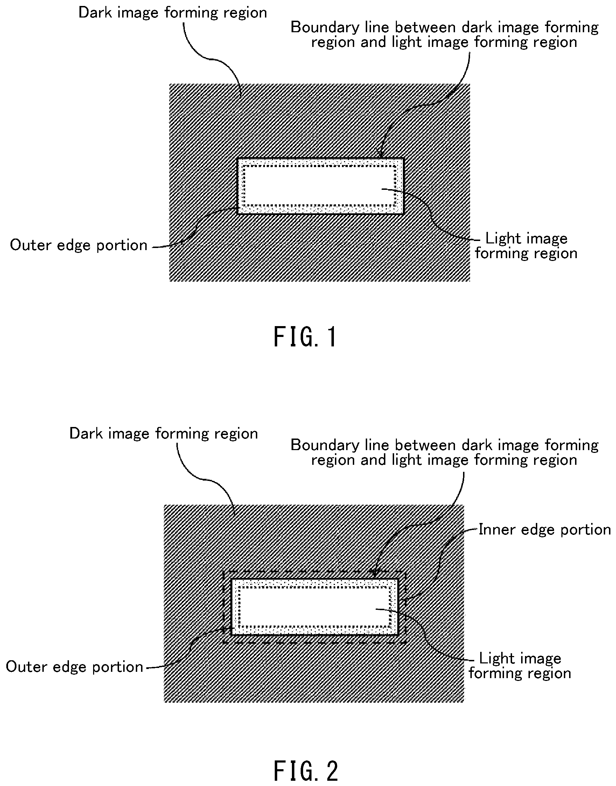

[FIG. 1] FIG. 1 shows an example of a schematic view of a printed image containing a dark image forming region and a light image forming region. In the drawing, the solid line is the boundary line between the dark image forming region and the light image forming region, the region defined by the solid line is the light image forming region, and the portion defined by the solid line and the dotted line is an outer edge portion of a region to be the dark image forming region.
[FIG. 2] FIG. 2 shows an example of a schematic view of a printed image containing a dark image forming region and a light image forming region. In the drawing, the solid line is the boundary line between the dark image forming region and the light image forming region, the region defined by the solid line is the light image forming region, the portion defined by the solid line and the dotted line is an outer edge portion of a region to be the dark image forming region, and the portion defined by the solid line and the broken line is an inner edge portion of the region to be the dark image forming region.

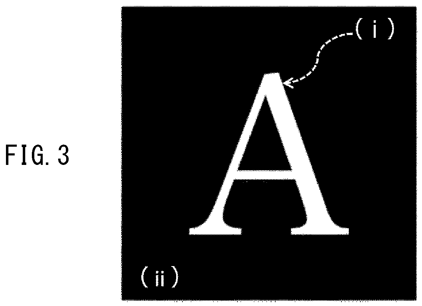

[FIG. 3] FIG. 3 is a schematic view of a printed image of knockout text constituted by a light image forming region (i) (printing duty of colorant-containing ink: 0%) and a dark image forming region (ii) (printing duty of colorant-containing ink: 100%) formed in Examples 1 to 8 and 10 to 12 and Comparative Examples 1 and 2.

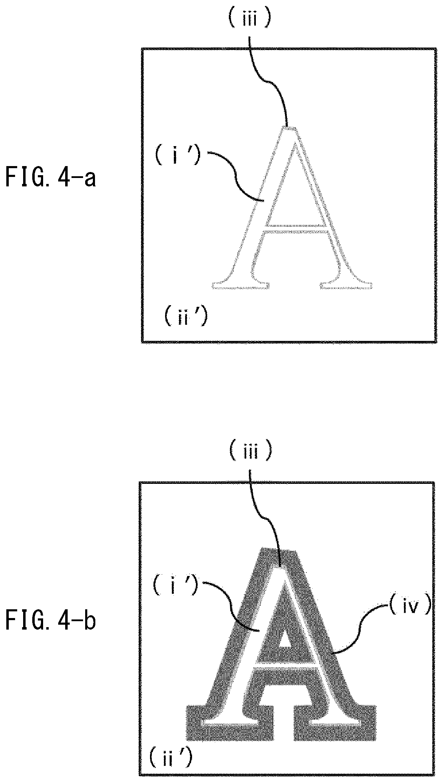

[FIG. 4-a] FIG. 4-a is an explanatory view showing a portion to which a pretreatment liquid is applied in Step 1 of Examples 1 to 10 and 12.
[FIG. 4-b] FIG. 4-b is an explanatory view showing a portion to which a pretreatment liquid is applied in Step 1 of Example 11.
[FIG. 5] FIG. 5 is an explanatory view showing a region to which a colorant-containing ink is applied in Step 2 of Examples 1 to 12 and Comparative Examples 1 and 2.
[FIG. 6] FIG. 6 is a photograph of a printed image of knockout text obtained in Example 1.
[FIG. 7] FIG. 7 is a photograph of a printed image of knockout text obtained in Comparative Example 2.
[FIG. 8] FIG. 8 is a schematic view of a printed image of a barcode constituted by a light image forming region (i) (printing duty of colorant-containing ink: 0%) and a dark image forming region (ii) (printing duty of colorant-containing ink: 100%) formed in Example 13.
[FIG. 9] FIG. 9 is an explanatory view showing a portion to which a pretreatment liquid is applied in Step 1 of Example 13.
[FIG. 10] FIG. 10 is a photograph of a printed image of a barcode obtained in Example 13.

[Inkjet Printing Method]

An inkjet printing method of the present invention (hereinafter, also referred to as a "printing method of the present invention") is an inkjet printing method for forming, on a printing medium, a printed image containing a dark image forming region and a light image forming region, wherein a printing duty of an ink containing a colorant (hereinafter, also referred to as a "colorant-containing ink") in the dark image forming region is larger than that in the light image forming region, including:

Step 1: a step of applying a pretreatment liquid to an outer edge portion of a region to be the dark image forming region, thereby obtaining a printing medium having a pretreatment liquid applied portion; and
Step 2: a step of applying, using a line-head type inkjet method, the colorant-containing ink to the region to be the dark image forming region on a face having the pretreatment liquid applied portion of the printing medium obtained in Step 1.

In the present invention, "printing" is a concept that encompasses printing and imprinting to record characters and images.

The printing method of the present invention suppresses the streak occurrence in the obtained printed material and achieves excellent clarity of a printed image containing a dark image forming region and a light image forming region, even in line-head type inkjet printing using a low-absorbency printing medium. Although the reason is not certain, it is thought to be as follows.

The printing method of the present invention forms, on a printing medium, a printed image containing a dark image forming region and a light image forming region, wherein a printing duty of a colorant-containing ink in the dark image forming region is larger than that in the light image forming region. This method includes Step 1 of applying a pretreatment liquid to an outer edge portion of a region to be the dark image forming region, thereby obtaining a printing medium having a pretreatment liquid applied portion, and Step 2 of applying, using a line-head type inkjet method, the colorant-containing ink to the region to be the dark image forming region on a face having the pretreatment liquid applied portion of the printing medium obtained in Step 1. It seems that accordingly, the contact between the pretreatment liquid and the colorant-containing ink suppresses the wetting and spreading of the ink at the boundary between the outer edge portion of the dark image forming region to which the pretreatment liquid is applied and the dark image forming region to which the colorant-containing ink is applied, which can further suppress the ink bleeding at the boundary between the light image forming region and the dark image forming region, thereby improving the clarity of the printed image containing the dark image forming region and the light image forming region.

On the other hand, in the present invention, the pretreatment liquid is not applied to the entire face of the printing medium. If the pretreatment liquid is applied to the entire face of the printing medium, the dark image forming region and the light image forming region are printed with the colorant-containing ink using the line-head type inkjet method, and the effect of suppressing the wetting and spreading of the pretreatment liquid applied in advance to the dark image forming region and the light image forming region makes the aforementioned streaks more noticeable. However, in the present invention, the pretreatment liquid is not applied to most of the dark image forming region and the light image forming region, and thus the streaks are not likely to occur, and the effect of the pretreatment liquid can be satisfactorily exhibited at the boundary between the dark image forming region and the light image forming region. As a result, it is considered possible to achieve both a suppressed streak occurrence and an improved clarity of the printed image containing the dark image forming region and the light image forming region.

The present invention is directed to an inkjet printing method for forming, on a printing medium, a printed image containing a dark image forming region and a light image forming region, wherein a printing duty of a colorant-containing ink in the dark image forming region is larger than that in the light image forming region.

In the present invention, a "printing duty of the colorant-containing ink" means the proportion of the area occupied by the colorant-containing ink within a predetermined area on the printing medium, that is, the proportion of the cumulative area where the colorant-containing ink is applied. For example, "100% printing duty of the colorant-containing ink" in the present invention means applying ink droplets such that ink droplets are applied without thinning the colorant-containing ink application portions in a square grid pattern, thereby obtaining a dot pitch in which the edges of adjacent ink dots spread circularly on the printing medium contact each other at circumferential positions. For example, a dark image forming region with a "printing duty of the colorant-containing ink" of 100% means a solid printing portion. On the other hand, "0% the printing duty of the colorant-containing ink" in the present invention means that no ink is applied at all within a predetermined area on the printing medium. For example, a light image forming region with a "printing duty of the colorant-containing ink" of 0% means a non-printing portion.

The printing of the colorant-containing ink in the dark image forming region is preferably more than 50%, more preferably 70% or more, even more preferably 90% or more, and even more preferably 100%, from the viewpoint of clarifying the outline of the dark image forming region and forming a high-quality printed image. The printing duty of the colorant-containing ink in the dark image forming region is preferably 100%, from the viewpoint of obtaining a printed image of knockout text.

The printing duty of the colorant-containing ink in the light image forming region is 0% or more, and is preferably 50% or less, more preferably 30% or less, and even more preferably 10% or less, from the viewpoint of clarifying the outline of the dark image forming region and forming a high-quality printed image. The printing duty of the colorant-containing ink in the light image forming region is preferably 0%, from the viewpoint of obtaining a printed image of knockout text.

The difference between the printing duty of the colorant-containing ink in the dark image forming region and the printing duty of the colorant-containing ink in the light image forming region is preferably 50% or more, more preferably 70% or more, and even more preferably 90% or more, from the viewpoint of clarifying the outline of the dark image forming region and forming a high-quality printed image. The difference between the printing duty of the colorant-containing ink in the dark image forming region and the printing duty of the colorant-containing ink in the light image forming region is preferably 100%, from the viewpoint of obtaining a printed image of knockout text.

In the present invention, the printed image that is formed may be images of knockout text, one-dimensional codes such as barcodes, two-dimensional codes such as matrix-type and stack-type codes, micro characters, or the like.

In the present invention, a "knockout text image" means an image in which against a background constituted by a dark image forming region printed by inkjet printing using a first color, a character constituted by a light image forming region printed using a color other than the first color is recognizable.

At this time, the first color and the other color other than the first color may be the primary colors, namely yellow, magenta, cyan, and black, or may each be a mixture of these primary colors, that is, a secondary color.

Among these printed images, the printed image that is formed is preferably a knockout text image, from the viewpoint of suppressing the streak occurrence in the obtained printed material and improving the clarity of the printed image.

<Step 1>

Step 1 is a step of applying a pretreatment liquid to an outer edge portion of a region to be the dark image forming region, thereby obtaining a printing medium having a pretreatment liquid applied portion.

The outer edge portion of the region to be the dark image forming region in the present invention belongs to the light image forming region in the printed image that is formed, as shown in FIG. 1.

The outer edge portion of the region to be the dark image forming region is a portion within a range of preferably 0.01 mm or more, more preferably 0.1 mm or more, and even more preferably 0.2 mm or more, and of preferably 1 mm or less, more preferably 0.7 mm or less, and even more preferably 0.4 mm or less, on the side away from the dark image forming region, starting from the boundary line between the dark image forming region and the light image forming region, from the viewpoint of practicality, considering ejection skew and conveying misalignment of the printing medium, and from the viewpoint of suppressing the streak occurrence in the obtained printed material and improving the clarity of the printed image.

In Step 1, it is sufficient that the pretreatment liquid is applied at least to the outer edge portion of the region to be the dark image forming region in the printed image, and it may be applied to the entire light image forming region including the outer edge portion of the region to be the dark image forming region. In the printing method of the present invention, it is preferable that in Step 1, the pretreatment liquid is applied only to the outer edge portion of the region to be the dark image forming region. If the printing duty of the colorant-containing ink in the light image forming region is 0%, it is more preferable that in Step 1, the pretreatment liquid is applied only to the outer edge portion of the region to be the dark image forming region.

If the printing duty of the colorant-containing ink in the light image forming region is more than 0%, in Step 1, the pretreatment liquid may be applied to a portion to which the colorant-containing ink is not applied in the region to be the light image forming region, in addition to the outer edge portion of the region to be the dark image forming region. In this case, in Step 2, which will be described later, the colorant-containing ink is applied using the line-head type inkjet method to a portion to which the colorant-containing ink is applied in the region to be the light image forming region on the face having the pretreatment liquid applied portion of the printing medium obtained in Step 1.

The "portion to which the colorant-containing ink is not applied" in the case in which the printing duty of the colorant-containing ink in the light image forming region is more than 0% means a non-output portion in raster image data that is used for colorant-containing ink output. For example, the "portion to which the colorant-containing ink is not applied" in the case in which the printing duty of the colorant-containing ink in the light image forming region is 40% means a non-output portion of the colorant-containing ink, which occupies 60% of a raster image that is used for colorant-containing ink output in the light image forming region.

In Step 1, from the viewpoint of suppressing the streak occurrence in the obtained printed material and improving the clarity of the printed image, it is preferable that (1) the pretreatment liquid is not applied to a region to be the dark image forming region, or (2) if the pretreatment liquid is applied to a region to be the dark image forming region, it is applied to the inner edge portion of the region to be the dark image forming region and is not applied to the dark image forming region other than the inner edge portion of the region to be the dark image forming region. In particular, (2) is more preferable because it can suppress positional misalignment of the portion to which the pretreatment liquid is applied in Step 1 and the portion on which the colorant-containing ink lands in Step 2, thereby improving the clarity of the printed image even in the case of a fine printed image.

The inner edge portion of the region to be the dark image forming region in the present invention belongs to the dark image forming region in the printed image that is formed, as shown in FIG. 2.

The inner edge portion of the region to be the dark image forming region is a portion within a range of preferably 0.01 mm or more, more preferably 0.1 mm or more, and even more preferably 0.2 mm or more, and of preferably 1 mm or less, more preferably 0.7 mm or less, and even more preferably 0.4 mm or less, on the side away from the light image forming region, starting from a boundary line between the dark image forming region and the light image forming region, from the viewpoint of practicality, considering ejection skew and conveying misalignment of the printing medium, and from the viewpoint of further improving the clarity of the printed image by suppressing the positional misalignment of a portion on which the colorant-containing ink lands.

(Printing Medium)

The printing medium for use in the present invention may be either a low-absorbency printing medium or a high-absorbency printing medium, but it is preferably a low-absorbency printing medium, from the viewpoint of suppressing the streak occurrence in the obtained printed material and from the viewpoint of the clarity of the printed image.

In the present invention, whether a printing medium has low absorbency or high absorbency is determined by the amount of water absorbed by the printing medium during 100 milliseconds of contact with pure water. The amount of water absorbed can be measured as the transfer amount of pure water during 100 milliseconds of contact therewith, using an automatic scanning liquid absorptometer (e.g., "KM500win" manufactured by Kumagai Riki Kogyo Co., Ltd.) under conditions of 23°C and 50% relative humidity.

In the present invention, "low-absorbency" is a concept that encompasses both low absorbency and non-absorbency, meaning that the aforementioned amount of water absorbed is 0 $g/m^2$ or more and 7 $g/m^2$ or less, and "high-absorbency" means that the aforementioned amount of water absorbed is more than 7 $g/m^2$.

The low-absorbency printing medium may be low-absorbency coated paper or a non-absorbency resin film. The coated paper may be general-purpose glossy paper, multicolor form gloss paper, or the like. The resin film is preferably at least one selected from the group consisting of a polyester film, a polyvinyl chloride film, a polypropylene film, and a polyethylene film, and more preferably a polyester film. These resin films may be surface-treated, such as by corona treatment.

The high-absorbency printing medium may be high-absorbency plain paper.

If a resin film is used as the low-absorbency printing medium, Step 1 may be performed by setting the region to be the dark image forming region and the region to be the light image forming region based on a mirror image obtained by reversing the desired printed image such that the intended image is visible when viewed from the opposite side of the printed image forming face of the non-absorbency film.

(Pretreatment Liquid)

<Wetting/Spreading-Suppressing Component (A)>

The pretreatment liquid according to the present invention preferably contains a component (A) for suppressing the wetting and spreading of the colorant-containing ink that is used in Step 2 on the printing medium (hereinafter, also referred to simply as a "wetting/spreading-suppressing component (A)").

It seems that since the pretreatment liquid according to the present invention contains the wetting/spreading-suppressing component (A), the wetting/spreading-suppressing component (A) prevents the colorant-containing ink from entering the light image forming region at the boundary between the outer edge portion of the dark image forming region to which the pretreatment liquid is applied and the dark image forming region to which the colorant-containing ink is applied, which can further suppress the ink bleeding at the boundary between the light image forming region and the dark image forming region, thereby improving the clarity of the printed image containing the dark image forming region and the light image forming region.

The wetting/spreading-suppressing component (A) in the present invention is preferably one or more selected from the group consisting of an aggregative compound (A1) and a hydrophobic compound (A2). That is to say, the pretreatment liquid according to the present invention preferably contains one or more selected from the group consisting of an aggregative compound (A1) and a hydrophobic compound (A2). Hereinafter, these compounds will be described.

[Aggregative Compound (A1)]

In the present invention, an "aggregative compound (A1)" is a component that, when applied to a printing medium, lowers the dispersibility of dispersible substances contained in the colorant-containing ink to cause aggregation or lower the solubility of solutes, thereby causing thickening or precipitation in the ink, and preventing the ink from entering the light image forming region. In the present invention, the dispersible substances contained in the colorant-containing ink refer to ink components such as pigments that are actually dispersed in a solid state within the ink. The solutes contained in the colorant-containing ink refer to components that are in a dissolved state within the ink but whose solubility is impaired upon contact with a printing medium treated with the pretreatment liquid, thereby causing thickening or precipitation. Specific examples of the components (solutes) that are in a dissolved state within the colorant-containing ink but whose solubility is impaired upon contact with a printing medium treated with the pretreatment liquid, thereby causing thickening or precipitation include dyes and water-soluble resins.

The aggregative compound (A1) may be preferably a metal salt, an acid or a salt thereof, or a cationic compound. Those listed as the aggregative compound (A1) may be used alone or in a combination of two or more.

The metal salt may be a monovalent metal salt or a metal salt with a valence of 2 or more. The acid may be an organic acid or an inorganic acid. The cationic compound may be a cationic resin, a cationic surfactant, or the like. In particular, the aggregative compound (A1) is more preferably one or more selected from the group consisting of a metal salt, an acid or a salt thereof, and a cationic resin.

(Metal Salt)

A metal salt that is used as the aggregative compound (A1) is preferably a polyvalent metal salt, from the viewpoint of suppressing the streak occurrence in the obtained printed material and improving the clarity of the printed image.

Any polyvalent metal salt may be used, as long as it is constituted by a polyvalent metal ion with a valence of 2 or more and an anion (a counterion to the polyvalent metal ion). The polyvalent metal ion with a valence of 2 or more may be an ion of calcium, magnesium, copper, nickel, zinc, barium, aluminum, titanium, strontium, chromium, cobalt, iron, or the like. In particular, it is preferably a divalent or trivalent metal ion, and more preferably a divalent metal ion, from the viewpoint of suppressing the streak occurrence in the obtained printed material and improving the clarity of the printed image. The divalent metal ion may be an ion of elements belonging to Group 2 of the periodic table, and specific examples thereof preferably include a magnesium ion, a calcium ion, an iron(II) ion, and the like. The trivalent metal ion may be preferably an aluminum ion, an iron(III) ion, or the like. In particular, it is more preferably one or more selected from the group consisting of a magnesium ion, a calcium ion, and an aluminum ion, even more preferably one or more selected from the group consisting of a magnesium ion and a calcium ion, and even more preferably a calcium ion, from the viewpoint of suppressing the streak occurrence in the obtained printed material and improving the clarity of the printed image.

The anion of the polyvalent metal salt may be an inorganic ion or an organic ion.

The inorganic ion may be a monovalent anion such as a nitric acid ion or a halide ion, a divalent anion such as a sulfuric acid ion, or the like.

The organic ion may be an organic acid ion such as a carboxylic acid ion.

In particular, the anion is preferably an inorganic ion, more preferably one or more selected from the group consisting of a nitric acid ion and sulfuric acid ion, and even more preferably a nitric acid ion.

The polyvalent metal salt is preferably one or more selected from the group consisting of magnesium nitrate, magnesium sulfate, calcium nitrate, and aluminum nitrate, more preferably one or more selected from the group consisting of magnesium nitrate, calcium nitrate, and aluminum nitrate, even more preferably one or more selected from the group consisting of magnesium nitrate and calcium nitrate, and even more preferably calcium nitrate, from the viewpoint of suppressing the streak occurrence in the obtained printed material and improving the clarity of the printed image.

The polyvalent metal salt may contain water of hydration in its raw material form.

Those listed as the polyvalent metal salt may be used alone or in a combination of two or more.

(Acid)

An acid that is used as the aggregative compound (A1) may be one or more selected from the group consisting of an organic acid and an inorganic acid.

The organic acid may be an aliphatic carboxylic acid, an aliphatic dicarboxylic acid, a hydroxycarboxylic acid, a carboxylic acid having a heterocyclic ring, a derivative of these compounds, a salt thereof, or the like.

The aliphatic carboxylic acid may be formic acid, acetic acid, or the like.

The aliphatic dicarboxylic acid may be oxalic acid, malonic acid, succinic acid, glutaric acid, maleic acid, fumaric acid, or the like.

The hydroxycarboxylic acid may be glycolic acid, lactic acid, malic acid, tartaric acid, citric acid, or the like.

The carboxylic acid having a heterocyclic ring may be ascorbic acid, pyrrolidonecarboxylic acid, pyroncarboxylic acid, pyrrolecarboxylic acid, furancarboxylic acid, pyridinecarboxylic acid, coumaric acid, thiophenecarboxylic acid, or nicotinic acid.

The inorganic acid may be preferably sulfuric acid, hydrochloric acid, nitric acid, phosphoric acid, or the like.

In particular, the acid is preferably an organic acid or a salt thereof, more preferably an aliphatic dicarboxylic acid or a salt thereof, even more preferably one or more selected from the group consisting of oxalic acid, malonic acid, and succinic acid, and even more preferably malonic acid, from the viewpoint of suppressing the streak occurrence in the obtained printed material and improving the clarity of the printed image.

Those listed as the acid may be used alone or in a combination of two or more.

These acids may form salts, but when an acid forms a metal salt, it is included in the aforementioned metal salts.

(Cationic Resin)

A cationic compound that is used as the aggregative compound (A1) may be a cationic resin, a cationic surfactant, or the like.

The cationic resin preferably has a cationic group.

In the present invention, a "cationic group" refers to a cation group or a group that can become a cation group upon ionization. The cationic group may be a basic group such as a primary amino group ($-NH_2$), a secondary amino group (-NHR, =NH (imino group)), a tertiary amino group (-NRR'), a quaternary ammonium group, or a hydrazino group. In particular, the cationic resin preferably has one or more selected from the group consisting of a primary amino group, a secondary amino group, a tertiary amino group, and a quaternary ammonium group, and more preferably has a quaternary ammonium group, from the viewpoint of suppressing the streak occurrence in the obtained printed material and improving the clarity of the printed image.

The basic group includes those neutralized with acids such as hydrochloric acid, sulfuric acid, nitric acid, acetic acid, formic acid, maleic acid, fumaric acid, citric acid, tartaric acid, adipic acid, or lactic acid.

Those listed as the cationic resin may be used alone or in a combination of two or more.

The cationic degree of the cationic resin is preferably 0.5 meq/g or more, and more preferably 3.0 meq/g or more, and is preferably 10 meq/g or less, from the viewpoint of suppressing the streak occurrence in the obtained printed material and improving the clarity of the printed image. The cationic degree of the cationic resin can be determined by colloidal titration using potassium polyvinyl sulfate reagent.

The cationic resin may be a cationic vinyl resin, a cationic olefin resin, a cationic urethane resin, a cationic amine-based resin, or the like.

The cationic vinyl resin may be a vinyl resin having a structural unit derived from a vinyl monomer having a cationic group.

Preferred examples of the vinyl monomer having a cationic group include an alkyl (meth)acrylate-based quaternary ammonium salt, an alkyl (meth)acryloylamide-based quaternary ammonium salt, a (meth)acrylic acid ester having a dialkylamino group, a (meth)acrylamide having a dialkylamino group, a styrene having a dialkylamino group, an amino group-containing heterocyclic vinyl monomer, and an allylamine compound.

The alkyl (meth)acrylate-based quaternary ammonium salt may be (meth)acryloyloxyethyltrimethylammonium chloride, (meth)acryloyloxyethyltriethylammonium chloride, (meth)acryloyloxyethyldimethylbenzylammonium chloride, (meth)acryloyloxyethylmethylmorpholinoammonium chloride, 2-hydroxy-3-(meth)acryloyloxypropyltrimethylammonium chloride, or the like.

The alkyl (meth)acryloylamide-based quaternary ammonium salt may be (meth)acryloylaminoethyltriethylammonium chloride, (meth)acryloylaminoethyldimethylbenzylammonium chloride, or the like.

The (meth)acrylic acid ester having a dialkylamino group may be trimethyl[(vinylphenyl)methyl]ammonium chloride, dimethylaminoethyl (meth)acrylate, diethylaminoethyl (meth)acrylate, dipropylaminoethyl (meth)acrylate, diisopropylaminoethyl (meth)acrylate, dibutylaminoethyl (meth)acrylate, diisobutylaminoethyl (meth)acrylate, di-tert-butylaminoethyl (meth)acrylate, or the like.

The (meth)acrylamide having a dialkylamino group may be dimethylaminopropyl (meth)acrylamide, diethylaminopropyl (meth)acrylamide, dipropylaminopropyl (meth)acrylamide, diisopropylaminopropyl (meth)acrylamide, dibutylaminopropyl (meth)acrylamide, diisobutylaminopropyl (meth)acrylamide, di-tert-butylaminopropyl (meth)acrylamide, or the like.

The styrene having a dialkylamino group may be dimethylaminostyrene, dimethylaminomethylstyrene, or the like.

The amino group-containing heterocyclic vinyl monomer may be N-vinyl pyrrolidine, N-vinylpyrrolidone, N-vinylcarbazole, or the like.

The allylamine compound may be allylamine, dimethylallylamine, diallylamine, methyldiallylamine, or the like.

The cationic vinyl resin may have a structural unit derived from a monomer other than the vinyl monomer having a cationic group.

Examples of the other monomer include an alkyl group-containing (meth)acrylic-based monomer, an alkylene oxide chain-containing (meth)acrylic-based monomer, an alkylene oxide chain-containing (meth)acrylic-based monomer, and an aromatic ring-containing (meth)acrylic-based monomer.

The styrene-based monomer may be styrene, α-methylstyrene, or the like.

The alkyl group-containing (meth)acrylic-based monomer may be methyl (meth)acrylate, butyl (meth)acrylate, octyl (meth)acrylate, 2-ethylhexyl (meth)acrylate, lauryl (meth)acrylate, stearyl (meth)acrylate, or the like.

The alkylene oxide chain-containing (meth)acrylic-based monomer may be (poly)ethylene glycol mono(meth) acrylate, (poly)propylene glycol mono(meth)acrylate, (poly)(ethylene glycol-propylene glycol) mono(meth)acrylate, or the like.

The aromatic ring-containing (meth)acrylic-based monomer may be phenyl (meth)acrylate, benzyl (meth) acrylate, phenoxyethyl (meth)acrylate, or the like.

In particular, the cationic vinyl resin is preferably a polyallylamine resin with a main backbone having a structure derived from an allylamine compound, from the viewpoint of suppressing the streak occurrence in the obtained printed material and improving the clarity of the printed image.

The polyallylamine resin may be a homopolymer or a copolymer of the aforementioned allylamine compound, or the like.

Specific examples of the polyallylamine resin include polyallylamine hydrochloride, polyallylamine amide sulfate, allylamine hydrochloride/diallylamine hydrochloride copolymer, allylamine acetate/diallylamine acetate copolymer, allylamine acetate/diallylamine acetate copolymer, allylamine hydrochloride/dimethylallylamine hydrochloride copolymer, allylamine/dimethylallylamine copolymer, polydiallylamine hydrochloride, polymethyldiallylamine hydrochloride, polymethyldiallylamine amide sulfate, polymethyldiallylamine acetate, polydiallyldimethylammonium chloride, diallylamine acetate/sulfur dioxide copolymer, diallylmethylethylammonium ethyl sulfate/sulfur dioxide copolymer, methyldiallylamine hydrochloride/sulfur dioxide copolymer, diallyldimethylammonium chloride/sulfur dioxide copolymer, diallyldimethylammonium chloride/acrylamide copolymer, and the like.

The cationic vinyl resin may be a material synthesized using a known method or may be a commercially available product. Commercially available products of the cationic vinyl resin include diallyldimethylammonium chloride polymers such as PAS-H-1L (product name, manufactured by Nittobo Medical Co., Ltd.).

The cationic olefin resin is a resin with a main backbone having a structural unit derived from an olefin such as ethylene or propylene, and known materials can be selected as appropriate and used. The cationic olefin resin may be used as an emulsion in which the resin is dispersed in a medium such as water or an organic solvent. The cationic olefin resin may be a commercially available product. Commercially available products of the cationic olefin resin include Arrowbase CB-1200 and CD-1200 (product names, both manufactured by Unitika Ltd.).

The cationic urethane resin may be those obtained by subjecting an organic compound (polyol) having two or more alcoholic hydroxyl groups per molecule and an polyisocyanate to a polyaddition reaction to obtain a urethane prepolymer, and reacting isocyanate groups thereof with an active hydrogen compound for introducing cationic hydrophilic groups. In the polyaddition reaction, a chain extender and a reaction terminator may also be used as necessary. Use of a chain extender allows further increase in molecular weight. The chain extender may be a polyol or a polyamine, and the reaction terminator may be a monoalcohol or a monoamine.

The cationic urethane resin is preferably used as an emulsion, and the emulsion may contain dispersants such as a surfactant as necessary.

The cationic urethane resin is preferably a cationic polycarbonate polyol-based urethane resin, a cationic polyester polyol-based urethane resin, or a cationic polyether polyol-based urethane resin.

The cationic urethane resin may be a commercially available product. Commercially available products of the cationic urethane resin include Hydran CP-7010, CP-7020, CP-7030, CP-7040, CP-7050, CP-7060, and CP-7610 (product names, all manufactured by DIC Corporation), Superflex 600, 610, 620, 630, 640, and 650 (product names, all manufactured by DKS Co. Ltd.), Urethane Emulsion WBR-2120C and WBR-2122C (product names, all manufactured by Taisei Fine Chemical Co., Ltd.), and the like.

The cationic amine-based resin may be a polyamine resin, a polyamide resin, or the like.

The polyamine resin is a resin with a main backbone having an amino group.

The polyamine resin may be a polyalkylene imine, a polyethylene polyamine, an alkylamine/epihalohydrin condensate, an alkylamine/ammonia/epihalohydrin condensate, or the like.

The polyamide resin is a resin with a main backbone having an amide group.

The cationic amine-based resin may be a commercially available product.

Commercially available products of the cationic amine-based resin include: Unisence KHE103L (hexamethylenediamine/epichlorohydrin condensate) and Unisence KHE104L (dimethylamine/epichlorohydrin condensate, aqueous solution with 20% solid content concentration by mass) (product names, all manufactured by Senka Corporation); FL-14 (product name, manufactured by SNF); Arafix 100, 251S, 255, and 255LOX (product names, all manufactured by Arakawa Chemical Industries, Ltd.); modified polyamine-based resins such as DK6810, DK6853, and DK6885, polyamide epichlorohydrin resins and polyamine epichlorohydrin resins such as WS4010, WS4011, WS4020, WS4024, WS4027, and WS4030 (product names, all manufactured by Chemipaz Corporation); dimethylamine/ammonialepichlorohydrin condensates such as Papyogen P-105 (product name, manufactured by Senka Corporation); polyamide epoxy resins such as Sumirez Resin 650(30), 675A, 6615, and SLX-1 (product names, all manufactured by Taoka Chemical Co., Ltd.); Catiomaster PD-1 and PD-7 (dimethylamine/epichlorohydrin condensates), Catiomaster PD-30, A, PDT-2, PE-10, and PE-30 (dimethylamine/ethylenediamine/epichlorohydrin condensates), DT-EH, EPA-SK01 (polyamide polyamine/epichlorohydrin condensates), and TMHMDA-E (product names, all manufactured by Yokkaichi Chemical Company Limited); and Jetfix 36N, 38A, and 5052 (product names, all manufactured by Satoda Chemical Industrial Co., Ltd.).

(Cationic Surfactant)

A cationic compound that is used as the aggregative compound (A1) may be a cationic surfactant. In the present invention, a "cationic surfactant" refers to a compound that has a hydrophobic group and a cationic group as a hydrophilic group, and that does not have a repeating structure derived from a monomer.
Preferred examples of the hydrophobic group of the cationic surfactant include an alkyl group with 10 to 22 carbon atoms.
The cationic surfactant may be an alkylamine salt, an alkyl quaternary ammonium salt, or the like.
The alkylamine salt may be an alkylamine acetate such as lauryl amine acetate or stearyl amine acetate.
The alkyl quaternary ammonium salt may be an alkyltrimethylammonium salt, a dialkyldialkylammonium salt, an alkylbenzyldimethylammonium salt, or the like.
In particular, the cationic surfactant is preferably an alkyl quaternary ammonium salt, and more preferably an alkyl trimethyl ammonium chloride having an alkyl group with 10 to 22 carbon atoms.

[Hydrophobic Compound (A2)]

In the present invention, a "hydrophobic compound (A2)" is a compound that contains a hydrophobic structure, and serves as a component that does not cause thickening or precipitation in the colorant-containing ink, but prevents the ink from entering the light image forming region due to the low affinity for the ink resulting from the hydrophobic structure at the boundary between the outer edge portion of the dark image forming region to which the pretreatment liquid is applied and the dark image forming region to which the colorant-containing ink is applied.
The hydrophobic compound (A2) is preferably one or more selected from the group consisting of an anionic resin and a hydrophobic surfactant.

(Anionic Resin)

An "anionic resin" that is used as the hydrophobic compound (A2) refers to an anionic resin with an amount dissolved of 10 g or less when dried at 105°C for 2 hours to reach constant weight and then dissolved in 100 g of water at 25°C until saturation is reached. If the anionic resin has an anionic group and the anionic group is neutralized with a neutralizing agent, it is determined based on the amount dissolved as measured in a state in which the neutralizing agent is present under conditions where the mass ratio between the anionic resin and the neutralizing agent is the same as that in the pretreatment solution.
The anionic resin is preferably a resin having an anionic group, from the viewpoint of compatibility with the pretreatment liquid and dispersion stability in the pretreatment liquid.
In the present invention, an "anionic group" refers to an anion group or a group that can become an anion group upon ionization. The anionic group may be a carboxy group ($-COOM$), a sulfonic acid group ($-SO_3M$), a phosphate group ($-OPO_3M_2$), or the like. In the chemical formulas above, M represents a hydrogen atom, an alkali metal, ammonium, or an organic ammonium. In particular, the anionic resin preferably has a carboxy group as the anionic group, and M is preferably ammonium.
The anionic resin may be an anionic vinyl resin, an anionic urethane resin, an anionic silicone resin, or the like.
Those listed as the anionic resin may be used alone or in a combination of two or more.
The anionic vinyl resin is preferably a vinyl resin having a structural unit derived from a vinyl monomer having an anionic group.
The vinyl monomer having an anionic group may be preferably one or more selected from the group consisting of acrylic acid, methacrylic acid, crotonic acid, itaconic acid, maleic acid, fumaric acid, and citraconic acid, more preferably one or more selected from the group consisting of acrylic acid and methacrylic acid, and even more preferably acrylic acid.
The anionic vinyl resin may be either a homopolymer or a copolymer, but is preferably a vinyl resin further containing a structural unit derived from a hydrophobic vinyl monomer in addition to a structural unit derived from a vinyl monomer having an anionic group.
The hydrophobic vinyl monomer may be preferably one or more selected from the group consisting of an alkyl (meth)acrylate having a linear, branched, or cyclic alkyl group with 1 to 22 carbon atoms, an aryl group-containing (meth)acrylate having an aryl group with 6 to 22 carbon atoms, and a styrene-based monomer.

Examples of the alkyl (meth)acrylate having an alkyl group with 1 to 22 carbon atoms preferably include: one or more alkyl (meth)acrylates having a linear or branched alkyl group selected from the group consisting of methyl (meth) acrylate, ethyl (meth)acrylate, propyl (meth)acrylate, isopropyl (meth)acrylate, butyl (meth)acrylate, isobutyl (meth) acrylate, hexyl (meth)acrylate, 2-ethylhexyl (meth)acrylate, octyl (meth)acrylate, dodecyl (meth)acrylate, and stearyl (meth)acrylate; and one or more cycloalkyl (meth)acrylates selected from the group consisting of cyclopentyl (meth) acrylate, cyclohexyl (meth)acrylate, and cycloheptyl (meth)acrylate.

Examples of the aryl group-containing (meth)acrylate having an aryl group with 6 to 22 carbon atoms preferably include one or more selected from the group consisting of phenyl (meth)acrylate, benzyl (meth)acrylate, phenoxyethyl (meth)acrylate, and phenoxy diethylene glycol (meth)acrylate.

The styrene-based monomer may be preferably one or more selected from the group consisting of styrene, $\alpha$-methylstyrene, vinyltoluene, and vinylnaphthalene.

In particular, the hydrophobic vinyl monomer is more preferably one or more selected from the group consisting of an alkyl (meth)acrylate having a linear or branched alkyl group with 1 to 8 carbon atoms, cycloalkyl (meth)acrylate, and styrene-based monomer, and even more preferably one or more selected from the group consisting of methyl (meth) acrylate, ethyl (meth)acrylate, butyl (meth)acrylate, isobutyl (meth)acrylate, cyclohexyl (meth)acrylate, styrene, and $\alpha$-methylstyrene.

The content of the vinyl monomer having an anionic group in the raw material monomers constituting the anionic vinyl resin or the content of the structural unit derived from a vinyl monomer having an anionic group in the anionic vinyl resin is preferably 5% by mass or more, more preferably 10% by mass or more, and even more preferably 15% by mass or more, and is preferably 40% by mass or less, more preferably 36% by mass or less, and even more preferably 32% by mass or less.

The content of the hydrophobic vinyl monomer in the raw material monomers constituting the anionic vinyl resin or the content of the structural unit derived from a hydrophobic vinyl monomer in the anionic vinyl resin is preferably 60% by mass or more, more preferably 64% by mass or more, and even more preferably 68% by mass or more, and is preferably 95% by mass or less, more preferably 90% by mass or less, and even more preferably 85% by mass or less.

The anionic vinyl resin preferably has a cross-linked structure, from the viewpoint of suppressing the streak occurrence in the obtained printed material and improving the clarity of the printed image. The anionic vinyl resin having a cross-linked structure is preferably those obtained by reacting an anionic vinyl resin having a structural unit derived from a vinyl monomer having an anionic group and a structural unit derived from a hydrophobic vinyl monomer with a cross-linking agent, from the foregoing viewpoints. In this case, the anionic vinyl resin having a cross-linked structure has a structure derived from the cross-linking agent in addition to the structural unit derived from a vinyl monomer having an anionic group and the structural unit derived from a hydrophobic vinyl monomer.

The cross-linking agent is preferably a polyglycidyl ether compound of a polyhydric alcohol having a hydrocarbon group with 3 to 8 carbon atoms, more preferably one or more selected from the group consisting of pentaerythritol polyglycidyl ether and trimethylolpropane polyglycidyl ether, and even more preferably trimethylolpropane polyglycidyl ether, from the viewpoint of suppressing the streak occurrence in the obtained printed material and improving the clarity of the printed image.

The crosslinking degree of the anionic vinyl resin having a cross-linked structure is preferably 20 mol% or more, more preferably 30 mol% or more, and even more preferably 40 mol% or more, and is preferably 80 mol% or less, more preferably 70 mol% or less, and even more preferably 60 mol% or less. If the anionic vinyl resin having a cross-linked structure is obtained by reacting an anionic vinyl resin having a structural unit derived from a vinyl monomer having an anionic group and a structural unit derived from a hydrophobic vinyl monomer with a cross-linking agent, the crosslinking degree thereof is the crosslinking degree calculated from the equivalent amount of anionic groups in the anionic vinyl resin before crosslinking and the equivalent amount of crosslinking functional groups in the cross-linking agent, and is expressed as "molar equivalent number of crosslinking functional groups in cross-linking agent/molar equivalent number in anionic groups contained in anionic vinyl resin before crosslinking".

The anionic vinyl resin may be a material synthesized as appropriate or may be a commercially available product. The anionic vinyl resin can be produced by copolymerizing the raw material monomer using a known polymerization method.

The anionic vinyl resin is preferably used as a dispersion.

The acid value of the anionic vinyl resin is preferably 40 mg KOH/g or more, more preferably 80 mg KOH/g or more, even more preferably 100 mg KOH/g or more, and even more preferably 120 mg KOH/g or more, and is preferably 320 mg KOH/g or less, more preferably 280 mg KOH/g or less, even more preferably 240 mg KOH/g or less, and even more preferably 200 mg KOH/g or less.

The weight average molecular weight of the anionic vinyl resin is preferably 5,000 or more, more preferably 8,000 or more, and even more preferably 10,000 or more, and is preferably 3,000,000 or less, more preferably 1,000,000 or less, and even more preferably 200,000 or less.

The acid value and the weight average molecular weight of the anionic vinyl resin are measured using the methods described in "Examples". The acid value of the anionic vinyl resin can be calculated from the mass ratio of the constituent monomers. If the anionic vinyl resin has a cross-linked structure, the acid value of the anionic vinyl resin can be calculated from the mass ratio of the constituent monomers and the crosslinking agent.

The anionic urethane resin is a resin having a structural unit derived from an organic compound (polyol) having two or more alcoholic hydroxyl groups per molecule, a structural unit derived from a polyisocyanate, and a structural unit derived from a dialkanol carboxylic acid. The anionic urethane resin is obtained by subjecting a polyol, a polyisocyanate, and a dialkanol carboxylic acid to a polyaddition reaction.

There is no particular limitation on the polyol constituting the anionic urethane resin, as long as it is a compound having two or more alcoholic hydroxyl groups per molecule, and it is preferably a polycarbonate polyol, a polyester polyol, or a polyether polyol, and more preferably a polycarbonate polyol or a polyester polyol. That is to say, the anionic urethane resin is preferably a polycarbonate-based polyurethane or a polyester-based polyurethane.

The polycarbonate polyol is a compound obtained by reacting a carbonate compound with a diol, that is, a diol having a carbonate structure.

The carbonate compound may be dimethyl carbonate, diethyl carbonate, diphenyl carbonate, ethylene carbonate, diethylene carbonate, or the like.

The diol may be an aliphatic diol that may be substituted with a lower alcohol, an alicyclic diol such as cyclohexanediol or hydrogenated xyleneglycol, or an aromatic diol such as xyleneglycol. In particular, it is preferably an aliphatic diol, and more preferably an aliphatic diol with a carbon chain length of 4 to 9 such as 1,4-butanediol, 3-methyl-1,5-pentanediol, 1,6-hexanediol, heptanediol, octanediol, or nonanediol.

The polyester polyol is a compound obtained by condensing a low-molecular-weight diol with a dicarboxylic acid, that is, a diol having an ester structure.

The low-molecular-weight diol may be a diol with 2 to 6 carbon atoms such as ethylene glycol, diethylene glycol, propylene glycol, dipropylene glycol, or 1,4-butanediol. In particular, it is preferably ethylene glycol, propylene glycol, 1,4-butanediol, or the like.

The dicarboxylic acid may be: an aliphatic dibasic acid such as succinic acid, glutaric acid, adipic acid, pimelic acid, suberic acid, azelaic acid, sebacic acid, or brassylic acid; or an aromatic dibasic acid such as isophthalic acid, terephthalic acid, or naphthalenedicarboxylic acid. In particular, it is preferably an aliphatic dibasic acid, and more preferably a dibasic acid with a methylene chain length of 4 to 8 such as adipic acid, pimelic acid, suberic acid, azelaic acid, or sebacic acid.

The polyether polyol may be polyethylene glycol, polypropylene glycol, polytetramethylene glycol, or the like.

The polyisocyanate constituting the anionic urethane resin may be an aliphatic diisocyanate having a chain structure, an aliphatic diisocyanate having a ring structure, an aliphatic diisocyanate having an aromatic ring, an aliphatic diisocyanate having an aromatic ring, an aromatic diisocyanate, or a modified form of these diisocyanates (carbodiimide-, uretdione-, or uretonimine-containing modified form, etc.), or the like.

The aliphatic diisocyanate having a chain structure may be tetramethylene diisocyanate, 1,6-hexamethylene diisocyanate, dodecamethylene diisocyanate, trimethyl hexamethylene diisocyanate, or lysine diisocyanate.

The aliphatic diisocyanate having a ring structure may be isophorone diisocyanate, hydrogenated xylylene diisocyanate, 4,4'-dicyclohexylmethane diisocyanate, or the like.

The aliphatic diisocyanate having an aromatic ring may be xylylene diisocyanate, tetramethyl xylylene diisocyanate, or the like.

The aromatic diisocyanate may be tolylene diisocyanate, diphenylmethane diisocyanate, or the like.

In particular, it is preferably one or more selected from the group consisting of an aliphatic diisocyanate and an aromatic diisocyanate.

The dialkanol carboxylic acid constituting the anionic urethane resin may be dimethylolbutanoic acid, dimethylolpropionic acid, a salt thereof, or the like.

In the anionic urethane resin, a chain extender and a reaction terminator may also be used as necessary. Use of a chain extender allows further increase in molecular weight. The chain extender may be a polyol or a polyamine, and the reaction terminator may be a monoalcohol or a monoamine.

The anionic urethane resin is preferably used as an emulsion, and the emulsion may contain dispersants such as a surfactant as necessary.

The acid value of the anionic urethane resin is preferably 3 mg KOH/g or more, more preferably 5 mg KOH/g or more, and even more preferably 7 mg KOH/g or more, and is preferably 50 mg KOH/g or less, more preferably 40 mg KOH/g or less, and even more preferably 35 mg KOH/g or less.

The anionic silicone resin is a resin with a resin structure having a silicone structure and an anionic group. The silicone structure may exist within the backbone structure of the resin or may exist as a side chain of the resin.

In the present invention, if the anionic resin has a polyurethane structure or a vinyl structure in addition to the silicone structure, it is classified as an anionic silicone resin as long as it is a resin with a resin structure having a silicone structure.

Examples of commercially available products of the anionic silicone resin include Chaline FE-230N (silicone/acrylic-based graft polymerization-type aqueous emulsion, acid value: 7.7 mg KOH/g), Chaline FE-502 (silicone/acrylic-based graft polymerization-type aqueous emulsion, acid value: 17.3 mg KOH/g), Chaline RU-911 (blend type (urethane blended), acid value: 2.2 mg KOH/g), all of which are manufactured by Nissin Chemical Co., Ltd., and the like.

The acid value of the anionic silicone resin is preferably 2 mg KOH/g or more, more preferably 4 mg KOH/g or more, and even more preferably 6 mg KOH/g or more, and is preferably 20 mg KOH/g or less, more preferably 10 mg KOH/g or less, and even more preferably 5 mg KOH/g or less.

(Hydrophobic Surfactant)

A "hydrophobic surfactant" that is used as the hydrophobic compound (A2) refers to a surfactant that does not form a single phase when mixed with ion-exchanged water at a mass ratio of 1:1 at 25°C. Cationic surfactants satisfying this condition are not included in the hydrophobic surfactant.

The hydrophobic surfactant that is used as the hydrophobic compound (A2) is preferably nonionic. The nonionic hydrophobic surfactant is preferably one or more selected from the group consisting of an acetylene glycol-based surfactant and a silicone-based surfactant.

The acetylene glycol-based surfactant is a diol having a carbon-carbon triple bond at the center of its structure, with each carbon atom adjacent to the carbon-carbon triple bond bearing a hydroxyl group, or an ethylene oxide (hereinafter, also referred to as "EO") adduct of such a diol. The acetylene glycol-based surfactant can be synthesized by reacting acetylene with a ketone or aldehyde corresponding to the desired acetylene glycol, and can be obtained, for example, by the method described in the completely revised version of "New Introduction to Surfactants" by Takehiko Fujimoto (Sanyo Chemical Industries, Ltd., 1992), pages 94 to 107, or the like.

The HLB value of the acetylene glycol-based surfactant is preferably 8 or less. In this case, the HLB (hydrophile-lipophile balance) value indicates the affinity of the surfactant for water and oil. The HLB value of the acetylene glycol-based surfactant can be determined by using the Griffin method from the following equation.

HLB value = 20× [(total formula weight of hydrophilic groups contained in surfactant)/(molecular weight of surfactant)]

Examples of the hydrophilic groups contained in the surfactant include a hydroxy group and an ethyleneoxy group.

The acetylene glycol-based surfactant may be preferably one or more selected from the group consisting of 2,4,7,9-tetramethyl-5-decyne-4,7-diol, 3,6-dimethyl-4-octyne-3,6-diol, 2,5-dimethyl-3-hexyn-2,5-diol, and EO adducts thereof. In particular, it is more preferably one or more selected from the group consisting of 2,4,7,9-tetramethyl-5-decyne-4,7-diol and EO adducts thereof, even more preferably one or more selected from the group consisting of 2,4,7,9-tetramethyl-5-decyne-4,7-diol and EO adducts thereof with an average number of moles of EO added of 6 or less, and even more preferably one or more selected from the group consisting of 2,4,7,9-tetramethyl-5-decyne-4,7-diol, an EO adduct of 2,4,7,9-tetramethyl-5-decyne-4,7-diol with an average number of moles of EO added of 1.3, and an EO adduct of 2,4,7,9-tetramethyl-5-decyne-4,7-diol with an average number of moles of EO added of 3.

Commercially available products of the acetylene glycol-based surfactant include Surfynol 104 PG-50 (propylene glycol 50% solution of 2,4,7,9-tetramethyl-5-decyne-4,7-diol with an average number of moles of EO added of 0, HLB value: 3.0 (calculation formula: 20×(34/226))), and Surfynol 420 (EO adduct of 2,4,7,9-tetramethyl-5-decyne-4,7-diol with an average number of moles of EO added of 1.3, HLB value: 6.4 (calculation formula: 20×((34+44x1.3)/(226+44x1.3)))), which are manufactured by Nissin Chemical Co., Ltd. and Air Products & Chemicals.

The silicone-based surfactant has a silicone structure and a structure exhibiting hydrophilicity, and the structure exhibiting hydrophilicity may be a polyether group.

The HLB value of the silicone-based surfactant is preferably 7 or less. In this example, the value listed in the catalog can be used as the HLB value of the silicone-based surfactant.

Commercially available products of the silicone-based surfactant preferably include KF-6015 (polyether-modified silicone (linear type), HLB value: 4.5 (catalog value)), KF-6017 (polyether-modified silicone (linear type), HLB value: 4.5 (catalog value)), KF-6028 (polyether-modified silicone (branched type), HLB value: 4.0 (catalog value)), KF-6038 (polyether-modified silicone (branched type, alkyl co-modified type), HLB value: 3.0 (catalog value)), and KF-6048 (polyether-modified silicone (linear type, alkyl-modified type), HLB value: 3.5 (catalog value)).

In particular, as the wetting/spreading-suppressing component (A), the pretreatment liquid according to the present invention preferably contains one or more selected from the group consisting of a metal salt, an organic acid or a salt thereof, a cationic resin, an anionic resin, and a hydrophobic surfactant, more preferably contains one or more selected from the group consisting of a metal salt, an organic acid or a salt thereof, a cationic resin, and an anionic resin, and even more preferably contains one or more selected from the group consisting of a metal salt, an organic acid or a salt thereof, a cationic resin, and an anionic resin having a cross-linked structure, from the viewpoint of suppressing the streak occurrence in the obtained printed material and improving the clarity of the printed image.

<Organic Solvent (B)>

It is preferable that the pretreatment liquid according to the present invention further contains an organic solvent (B), from the viewpoint of suppressing the streak occurrence in the obtained printed material and improving the clarity of the printed image.

Those listed as the organic solvent (B) may be used alone or in a combination of two or more.

The static surface tension of the organic solvent (B) as measured at 25°C is preferably 40 mN/m or less, and more preferably 38 mN/m or less, and is preferably 18 mN/m or more, more preferably 20 mN/m or more, even more preferably 22 mN/m or more, and even more preferably 24 mN/m or more, from the viewpoint of suppressing the streak occurrence in the obtained printed material and improving the clarity of the printed image.

The static surface tension of the organic solvent (B) at 25°C is measured using the method described in "Examples".

If two or more organic solvents are used as the organic solvent (B), the static surface tension of the organic solvent (B) is a weighted average value based on the content (% by mass) of each organic solvent.

The boiling point of the organic solvent (B) under atmospheric pressure is preferably 280°C or lower, more preferably 260°C or lower, and even more preferably 240°C or lower, from the viewpoint of facilitating the evaporation from the printing medium, thereby suppressing the streak occurrence in the obtained printed material and improving the clarity of the printed image. Also, the boiling point is preferably 140°C or higher, more preferably 160°C or higher, and even more preferably 180°C or higher, from the viewpoint of suppressing the excessive acceleration of the evaporation rate to suppress the uneven distribution of the wetting/spreading-suppressing component, thereby suppressing the streak occurrence in the obtained printed material and improving the clarity of the printed image.

If two or more organic solvents are used as the organic solvent (B), the boiling point of the organic solvent (B) is a weighted average value based on the content (% by mass) of each organic solvent.

The organic solvent (B) may be: a polyhydric alcohol; an ether such as a polyhydric alcohol alkyl ether, a polyhydric alcohol aryl ether, or a polyhydric alcohol aralkyl ether; a nitrogen-containing heterocyclic compound; an amide; an amine; a sulfur-containing compound; or the like. In particular, it is preferably one or more selected from the group consisting of a polyhydric alcohol and a polyhydric alcohol alkyl ether.

Examples of the polyhydric alcohol include diols such as ethylene glycol, diethylene glycol, propylene glycol (1,2-propanediol), 1,3-propylene glycol, dipropylene glycol (isomer mixture), 1,3-butanediol, 1,4-butanediol, 2,3-butanediol, triethylene glycol, polyethylene glycol, and polypropylene glycol.

Examples of the polyhydric alcohol alkyl ether include (poly)alkylene glycol monoalkyl ethers such as ethylene glycol monomethyl ether, ethylene glycol monoethyl ether, ethylene glycol monopropyl ether, ethylene glycol monoisopropyl ether, ethylene glycol monobutyl ether, ethylene glycol monoisobutyl ether, ethylene glycol monohexyl ether, ethylene glycol mono-2-ethylhexyl ether, diethylene glycol monomethyl ether, diethylene glycol monoethyl ether, diethylene glycol monoisopropyl ether, diethylene glycol monobutyl ether, diethylene glycol monoisobutyl ether, diethylene glycol dimethyl ether, diethylene glycol diethyl ether, diethylene glycol methyl ethyl ether, triethylene glycol monobutyl ether, triethylene glycol dimethyl ether, tetraethylene glycol monomethyl ether, propylene glycol monomethyl ether, propylene glycol monopropyl ether, propylene glycol monobutyl ether, dipropylene glycol monomethyl ether, dipropylene glycol monoethyl ether, dipropylene glycol monopropyl ether, dipropylene glycol monobutyl ether, and dipropylene glycol dimethyl ether.

Examples of the polyhydric alcohol aryl ether include ethylene glycol monophenyl ether. Examples of the polyhydric alcohol aralkyl ether include ethylene glycol monobenzyl ether.

Examples of the nitrogen-containing heterocyclic compound include 2-pyrrolidone, N-methyl-2-pyrrolidone, N-hydroxyethyl-2-pyrrolidone, 1,3-dimethyl-2-imidazolidinone, and ε-caprolactam.

Examples of the amide include formamide, N-methyl formamide, N,N-dimethylformamide, 3-methoxy-N,N-dimethylpropionamide, and 3-butoxy-N,N-dimethylpropionamide.

Examples of the amine include monoethanolamine, diethanolamine, triethanolamine, and triethylamine.

Examples of the sulfur-containing compound include dimethyl sulfoxide, sulfolane, and thiodiethanol.

Examples of the organic solvent further include propylene carbonate and carbonic acid ethylene as well.

[Water]

It is preferable that the pretreatment liquid according to the present invention further contains water. The pretreatment liquid according to the present invention is preferably aqueous. The term "aqueous" for the pretreatment liquid according to the present invention means that water occupies the largest proportion by mass among the liquid components contained in the pretreatment liquid.

The water is preferably purified water or ultrapure water, such as ion-exchanged water, ultrafiltrated water, reverse-osmosis water, or distilled water, from which ionic impurities have been removed to the greatest extent possible.

The pretreatment liquid according to the present invention may further contain, as necessary, other components such as a surfactant other than the aforementioned cationic surfactant and hydrophobic surfactant, a pH adjuster, a fixing aid, a colorant, a defoaming agent, a preservative and antifungal agent, and a rust inhibitor.

The pretreatment liquid according to the present invention preferably contains a surfactant other than the aforementioned cationic surfactant and hydrophobic surfactant.

The surfactant other than the aforementioned cationic surfactant and hydrophobic surfactant is preferably a hydrophilic nonionic surfactant.

In the present invention, a "hydrophilic nonionic surfactant" refers to a surfactant that forms a single phase when mixed with ion-exchanged water at a mass ratio of 1:1 at 25°C.

Examples of the hydrophilic nonionic surfactant include a hydrophilic polyoxyalkylene alkyl ether-based surfactant, a hydrophilic acetylene-based surfactant, a hydrophilic polyhydric alcohol-based surfactant, a hydrophilic fatty acid alkanolamide, a hydrophilic silicone-based surfactant, and a hydrophilic fluorine-based surfactant. In particular, it is preferably one or more selected from the group consisting of a hydrophilic acetylene-based surfactant and a hydrophilic silicone-based surfactant.

The HLB value of the hydrophilic acetylene-based surfactant is preferably more than 8. In this example, the HLB value of the hydrophilic acetylene-based surfactant can be determined using the Griffin method from the equation above.

Examples of the hydrophilic acetylene-based surfactant include one or more ethylene oxide (EO) adducts selected from the group consisting of 2,4,7,9-tetramethyl-5-decyne-4,7-diol, 3,6-dimethyl-4-octyne-3,6-diol, 3,5-dimethyl-1-hexyn-3-ol, and 2,4-dimethyl-5-hexyn-3-ol. The average number (n) of moles of EO added to the EO adducts is preferably more than 8, and is preferably 20 or less and more preferably 10 or less.

The hydrophilic silicone-based surfactant is preferably a polyether-modified silicone-based surfactant. Examples of the polyether group of the polyether-modified silicone-based surfactant preferably include a polyethyleneoxy group, a polypropyleneoxy group, and a polyalkyleneoxy group formed by block or random addition of an ethyleneoxy group and a propyleneoxy group (trimethyleneoxy group or propane-1,2-diyloxy group). It is possible to use a compound in which a polyether group is grafted onto the silicone backbone and a compound in which polyether groups are block-bonded to both terminal ends of the silicone backbone.

The HLB value of the hydrophilic silicone-based surfactant is preferably more than 8. In this example, the value listed in the catalog can be used as the HLB value of the hydrophilic silicone-based surfactant.

Examples of commercially available products of the hydrophilic nonionic surfactant include "Surfynol" series manufactured by Nissin Chemical Co., Ltd. and Air Products & Chemicals, and "KF' series manufactured by Shin-Etsu Chemical Co., Ltd.

Those listed as the hydrophilic nonionic surfactant may be used alone or in a combination of two or more. In particular, it is preferable to use a hydrophilic acetylene glycol-based surfactant and a hydrophilic silicone-based surfactant in a combination, from the viewpoint of suppressing the streak occurrence in the obtained printed material and improving the clarity of the printed image.

The pretreatment liquid according to the present invention may contain a pH adjuster.

The pH adjuster means an agent that suppresses pH fluctuations caused by environmental changes and maintains the pH of the pretreatment liquid constant. The pH adjuster may be selected as appropriate from known agents according to the pH of the pretreatment liquid according to the present invention.

The pretreatment liquid according to the present invention may contain a colorant, as long as the effects of the present invention are not impaired. Such a colorant may be those that are used in a colorant-containing ink, which will be described later. If the pretreatment liquid according to the present invention contains a colorant, the colorant is preferably a pigment or a hydrophobic dye from the viewpoint of water resistance, and is preferably a pigment from the viewpoint of exhibiting high weather resistance.

The content of the colorant in the pretreatment liquid is preferably 2% by mass or less, more preferably 1% by mass or less, even more preferably 0.1% by mass or less, and even more preferably 0.01% by mass or less, and even more preferably the pretreatment liquid does not contain any colorants, from the viewpoint of improving the clarity of the printed image.

[Composition of Pretreatment Liquid]

The content of the wetting/spreading-suppressing component (A) in the pretreatment liquid according to the present invention is preferably 0.5% by mass or more, more preferably 1% by mass or more, and even more preferably 2% by mass or more, from the viewpoint of suppressing the streak occurrence in the obtained printed material and improving the clarity of the printed image. Also, the content is preferably 10% by mass or less, more preferably 7% by mass or less, and even more preferably 5% by mass or less, from the foregoing viewpoints.

The content of the organic solvent (B) in the pretreatment liquid according to the present invention is preferably 10% by mass or more, more preferably 15% by mass or more, even more preferably 20% by mass or more, and even more preferably 25% by mass or more, from the viewpoint of suppressing the streak occurrence in the obtained printed material and improving the clarity of the printed image. Also, the content is preferably 50% by mass or less, more preferably 45% by mass or less, even more preferably 40% by mass or less, and even more preferably 35% by mass or less, from the foregoing viewpoints.

The mass ratio of the content of the wetting/spreading-suppressing component (A) to the content of the organic solvent (B) in the pretreatment liquid according to the present invention [wetting/spreading-suppressing component (A)/organic solvent (B)] is preferably 0.01 or more, more preferably 0.03 or more, even more preferably 0.05 or more, and even more preferably 0.07 or more, from the viewpoint of suppressing the streak occurrence in the obtained printed material and improving the clarity of the printed image. Also, the mass ratio is preferably 1 or less, more preferably 0.5 or less, and even more preferably 0.3 or less, from the foregoing viewpoints.

The content of the water in the pretreatment liquid according to the present invention is preferably 40% by mass or more, more preferably 50% by mass or more, and even more preferably 60% by mass or more, and is preferably 85% by mass or less, more preferably 80% by mass or less, even more preferably 75% by mass or less, and even more preferably 70% by mass or less.

If a hydrate form containing water of hydration is used as the raw material form of the polyvalent metal salt, the content of the water in the pretreatment liquid according to the present invention means the amount including the content of water from the hydrate of the polyvalent metal salt.

If the pretreatment liquid according to the present invention contains a hydrophilic nonionic surfactant, the content of the hydrophilic nonionic surfactant in the pretreatment liquid is preferably 0.01% by mass or more, more preferably 0.1% by mass or more, and even more preferably 0.5% by mass or more, and is preferably 3% by mass or less, more preferably 2% by mass or less, and even more preferably 1% by mass or less.

The content of the colorant in the pretreatment liquid according to the present invention is preferably 2% by mass or less, more preferably 1% by mass or less, even more preferably 0.5% by mass or less, even more preferably 0.1% by mass or less, and even more preferably 0% by mass.

The pretreatment liquid according to the present invention is preferably prepared by mixing as appropriate the wetting/spreading-suppressing component (A), the organic solvent (B), and as necessary water and the aforementioned other components. The pH of the pretreatment liquid can be controlled as appropriate using the aforementioned pH adjuster.

The pretreatment liquid according to the present invention is applied to the printing medium preferably in a solid fill, that is, such that the printing duty of the pretreatment liquid is 100%, from the viewpoint of improving the clarity of the printed image.

In this example, the "printing duty of the pretreatment liquid" means the proportion of the area occupied by the pretreatment liquid within a predetermined area on the printing medium, that is, the proportion of the cumulative area to which the pretreatment liquid is applied.

Examples of the method for applying the pretreatment liquid to the printing medium preferably include spraying, brushing, and inkjet methods. In particular, the pretreatment liquid is applied preferably using an inkjet method, from the viewpoint of the ease of adjusting the application position of the pretreatment liquid and from the viewpoint of suppressing the streak occurrence in the obtained printed material and improving the clarity of the printed image.

The apparatus that is used to apply the pretreatment liquid to the printing medium is preferably those in which a means for applying the pretreatment liquid that is used in Step 1 and a means for applying the colorant-containing ink that is used in Step 2 are integrated, and more preferably those using the line-head type inkjet method as a means for applying the pretreatment liquid that is used in Step 1 and a means for applying the colorant-containing ink that is used in Step 2, from the viewpoint of enabling Steps 1 and 2 to be performed successively.

The amount of the pretreatment liquid applied to the printing medium is preferably 0.003 g/m$^2$ or more, more preferably 0.01 g/m$^2$ or more, and even more preferably 0.1 g/m$^2$ or more, from the viewpoint of suppressing the streak occurrence in the printed material and improving the clarity of the printed image. Also, the amount is preferably 10 g/m$^2$ or less, more preferably 5 g/m$^2$ or less, even more preferably 1 g/m$^2$ or less, and even more preferably 0.5 g/m$^2$ or less, from the foregoing viewpoints.

The amount of the wetting/spreading-suppressing component (A) contained in the pretreatment liquid and applied to the printing medium is preferably 0.0001 g/m$^2$ or more, more preferably 0.0005 g/m$^2$ or more, and even more preferably 0,001 g/m$^2$ or more, from the viewpoint of suppressing the streak occurrence in the printed material and improving the clarity of the printed image. Also, the amount is preferably 0, 1 g/m$^2$ or less, more preferably 0.01 g/m$^2$ or less, and even more preferably 0.001 g/m$^2$ or less, from the foregoing viewpoints.

Step 1 of the printing method of the present invention preferably includes, after the pretreatment liquid is applied to the printing medium, a step of maintaining the printing medium to which the pretreatment liquid has been applied, at 25°C or higher. This step has the effect of removing volatile components in the pretreatment liquid from the printing medium to which the pretreatment liquid has been applied and can dry the printing medium (hereinafter, the step in Step 1 of maintaining the printing medium to which the pretreatment liquid has been applied, at 25°C or higher, is also referred to as a "drying step of Step 1").

Furthermore, Step 1 of the printing method of the present invention preferably includes a step of drying the printing medium to which the pretreatment liquid has been applied. Step 1 of the printing method of the present invention preferably includes a step of solidifying the pretreatment liquid applied portion.

That is to say, the drying step of Step 1 is preferably a step of maintaining the printing medium to which the pretreatment liquid has been applied, at 25°C or higher, and drying the printing medium to which the pretreatment liquid has been applied, and more preferably a step of maintaining the printing medium to which the pretreatment liquid has been applied, at 25°C or higher, drying the printing medium to which the pretreatment liquid has been applied, and solidifying the pretreatment liquid applied portion. This allows for further improvement in the clarity of the printed image.

In Step 1, the method for maintaining the printing medium to which the pretreatment liquid has been applied, at 25°C or higher, may be preferably static holding, air blowing, heating, reducing the pressure, or the like. In the printing method of the present invention, the application of active energy rays such as ultraviolet rays or radiation is not included in the drying step of Step 1 of the present invention.

The temperature at which the printing medium is maintained in the drying step of Step 1 is preferably 120°C or lower, more preferably 110°C or lower, and even more preferably 100°C or lower, from the viewpoint of suppressing deformation of the printing medium. Also, the temperature is preferably 25°C or higher, more preferably 30°C or higher, and even more preferably 40°C or higher, from the viewpoint of enabling rapid drying, thereby further improving the clarity of the printed image.

The duration for which the printing medium is maintained at the specified temperature (maintaining time) in the drying step of Step 1 is preferably 0.5 seconds or longer, more preferably 1 second or longer, and even more preferably 1.5 seconds or longer, and is preferably 30 minutes or shorter, more preferably 20 minutes or shorter, even more preferably 10 minutes or shorter, and even more preferably 1 minute or shorter.

The drying rate of the pretreatment liquid in the drying step of Step 1, that is, the removal rate of volatile components in the pretreatment liquid is preferably 40% by mass or more, more preferably 50% by mass or more, even more preferably 60% by mass or more, and even more preferably 80% by mass or more, from the viewpoint of improving the clarity, in particular the sharpness of the printed image.

In the present invention, the "drying rate of the pretreatment liquid" is the percentage ratio of the total mass of components actually removed by the drying step of Step 1 to the total mass of components in the pretreatment liquid that can be removed by that drying step, and is calculated by the following formula:

$$\text{Drying rate (\% by mass)} = (M1-M2)/[(M1-M0)\times X/100]\times 100$$

wherein the mass of the printing medium is taken as $M0$, the mass of the printing medium immediately after the pretreatment liquid is applied in Step 1 is taken as $M1$, the mass of the printing medium after the step of maintaining the printing medium at 25°C or higher is performed is taken as $M2$, and the proportion of the total mass of components in the pretreatment liquid that can be removed by the drying step of Step 1 is taken as $X\%$ by mass.

The proportion $X$ (% by mass) of the total mass of components in the pretreatment liquid that can be removed by the drying step of Step 1 in the present invention is preferably the content (% by mass) of the water in the pretreatment liquid.

<Step 2>

Step 2 is a step of applying, using a line-head type inkjet method, the colorant-containing ink to the region to be the dark image forming region on a face having the pretreatment liquid applied portion of the printing medium obtained in Step 1.

If the printing duty of the colorant-containing ink in the light image forming region is 0%, it is preferable that in Step 2, the colorant-containing ink is not applied to the light image forming region. That is to say, in this case, Step 2 is preferably Step 2-1 below.

Step 2-1: a step of applying, using a line-head type inkjet method, the colorant-containing ink only to the region to be the dark image forming region on a face having the pretreatment liquid applied portion of the printing medium obtained in Step 1

If the printing duty of the colorant-containing ink in the light image forming region is more than 0%, in Step 2, the colorant-containing ink is applied not only to the region to be the dark image forming region on a face having the pretreatment liquid applied portion of the printing medium obtained in Step 1 but also to the portion to which the colorant-containing ink is applied in the region to be the light image forming region. That is to say, in this case, Step 2 is Step 2-2 below.

Step 2-2: a step of applying, using a line-head type inkjet method, the colorant-containing ink to the region to be the dark image forming region on a face having the pretreatment liquid applied portion of the printing medium obtained in Step 1 and to the portion to which the colorant-containing ink is applied in the region to be the light image forming region

(Colorant-Containing Ink)

Hereinafter, the ink containing a colorant according to the present invention (colorant-containing ink) will be described.

The colorant-containing ink according to the present invention is preferably one or more selected from the group consisting of black and color inks.

[Colorant]

The colorant for use in the colorant-containing ink according to the present invention may be either a dye or a pigment. In particular, the colorant is preferably a pigment, from the viewpoint of water resistance, light resistance, weather resistance, gas resistance, and the like.

The pigment may be either known organic pigments or inorganic pigments. These pigments may be used alone or in a combination of two or more, or as a mixed crystal.

An inorganic pigment may be titanium oxide, iron oxide, calcium carbonate, barium sulfate, aluminum hydroxide, barium yellow, cadmium red, chromium yellow, carbon black, or the like.

An organic pigment may be an azo pigment, a polycyclic pigment, a dye chelate, a nitro pigment, a nitroso pigment, an aniline black, or the like. Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment. Examples of the dye chelate include a basic dye-type chelate and an acid dye-type chelate.

Specific examples of the pigments for black ink include a carbonaceous material, a metallic material, and an organic pigment. The carbonaceous material may be lamp black (C.I. Pigment Black 6) or various types of carbon black (C.I. Pigment Black 7) such as furnace black, acetylene black, or channel black. The metallic material may be copper-chromium oxide (C.I. Pigment Black 28), iron oxide (C.I. Pigment Black 11), titanium oxide (C.I. Pigment Black 35), or the like. The organic pigment may be aniline black (C.I. Pigment Black 1) or the like.

Specific examples of the pigments for color inks include one or more part-numbered products selected from the group consisting of C.I. Pigment Yellow, C.I. Pigment Orange, C.I. Pigment Red, C.I. Pigment Violet, C.I. Pigment Blue, and C.I. Pigment Green.

There is no particular limitation on the dye, and examples thereof include an acid dye, a basic dye, a direct dye, and a reactive dye. Those listed as the dye may be used alone or in a combination of two or more.

Examples of the dye include part-numbered products selected from the group consisting of C.I. Acid Yellow, C.I. Acid Red, C.I. Acid Blue, C.I. Acid Black, C.I. Food Black, C.I. Direct Yellow, C.I. Direct Red, C.I. Direct Blue, C.I. Direct Black, C.I. Reactive Red, and C.I. Reactive Black.

If the colorant-containing ink contains a pigment, the pigment is dispersed in a medium in the ink. The form of the pigment in the colorant-containing ink may be a form in which the pigment is dispersed using a resin (hereinafter, also referred to as a "pigment dispersing resin") or a surfactant as a dispersant, or a self-dispersing form in which the pigment is dispersed without using a dispersant. In particular, the form of the pigment in the colorant-containing ink is preferably a form in which the pigment is dispersed using a pigment dispersing resin.

The pigment dispersing resin may be either a water-soluble resin or a water-insoluble resin.

In this example, whether the resin is "water-soluble" or "water-insoluble" is determined as follows. When dried at 105°C for 2 hours to reach constant weight and then dissolved in 100 g of water at 25°C until saturation is reached, a resin with an amount dissolved of more than 10 g is determined to be "water-soluble", and a resin with an amount dissolved of 10 g or less is determined to be "water-insoluble". As will be described later, if the resin has an anionic group, the amount dissolved is measured in a state in which the neutralizing agent is present under conditions where the mass ratio between the resin and the neutralizing agent is the same as that in the colorant-containing ink.

Specifically, the form of the pigment in the colorant-containing ink may be preferably (a) a form in which a water-soluble resin is adsorbed onto the pigment surface, (b) a form in which a water-soluble surfactant or a water-dispersible surfactant is adsorbed onto the pigment surface, (c) a self-dispersing form in which the pigment is dispersed without using any pigment dispersing resins or any surfactants, by chemically or physically introducing hydrophilic functional groups onto the pigment face, (d) a form in which the pigment is coated with a water-insoluble resin, or the like, from the viewpoint of improving the dispersion stability.

Pigment in the aforementioned forms (a) to (d) are preferably anionic. In the form (a), the water-soluble resin preferably has an anionic group. In the form (b), the water-soluble surfactant or the water-dispersible surfactant preferably has an anionic group. In the form (c), the hydrophilic functional groups introduced onto the pigment surface preferably have an anionic group. In the form (d), the water-insoluble resin preferably has an anionic group.

The anionic group is as defined for the anionic resin of the hydrophobic compound (A2). The anionic group may be a carboxy group (-COOM), a sulfonic acid group ($-SO_3M$), a phosphate group ($-OPO_3M_2$), or the like. In the chemical formulas above, M represents a hydrogen atom, an alkali metal, ammonium, or an organic ammonium. In particular, the anionic resin preferably has a carboxy group as the anionic group, and M is preferably an alkali metal.

In particular, if the wetting/spreading-suppressing component (A) contained in the pretreatment liquid is the aggregative compound (A1), it is possible for the form of the pigment in the colorant-containing ink to efficiently exhibit an aggregation effect by lowering the dispersibility of dispersible substances contained in the ink. Also, if the wetting/-spreading-suppressing component (A) contained in the pretreatment liquid is the hydrophobic compound (A2), it is possible to prevent excessive wetting and spreading of the ink. This enhances the efficiency of wetting and spreading prevention, suppressing the streak occurrence in the obtained printed material and improving the clarity of the printed image. From this viewpoint, the form is preferably one or more selected from the group consisting of the forms (c) and (d), and more preferably the form (d).

If the pigment in the colorant-containing ink is in the form (d), the form in which the pigment is coated with a water-insoluble resin may include a form in which the pigment is included (encapsulated) in the water-insoluble resin, a form in which the pigment is uniformly dispersed in the water-insoluble resin, a form in which the pigment is exposed from the surface of particles of the water-insoluble resin, a form in which the water-insoluble resin is adsorbed onto the pigment, and the like.

If the form of the pigment in the colorant-containing ink is in the form (d), the form is preferably a form in which the pigment is coated with a water-insoluble resin having a cross-linked structure. The form in which the pigment is coated with a water-insoluble resin having a cross-linked structure preferably has a structure in which the water-insoluble resin contains a constituent component of a polymer having a linear two-dimensional structure, which may include branched chains, and a constituent component derived from a cross-linking agent. This type of cross-linked structure is considered to be a three-dimensional network formed by the polymer having a linear two-dimensional structure, which may include branched chains, through the incorporation of the constituent component derived from a cross-linking agent.

[Pigment Dispersing Resin]

If the colorant-containing ink is in the form (d), there is no particular limitation on the type of water-insoluble resin that is used to disperse the pigment as the pigment dispersing resin of the colorant-containing ink.

Specific examples of the water-insoluble resin include a (meth)acrylic-based resin, a styrene/(meth)acrylic-based resin, a maleic acid resin, a styrene/maleic acid resin, a urethane resin, and a polyester resin. If the form of the pigment in the colorant-containing ink is in the form (d) in which the pigment is coated with a water-insoluble resin having a cross-linked structure, the aforementioned constituent component of a polymer having a linear two-dimensional structure, which may include branched chains, is preferably one or more selected from the group consisting of a (meth)acrylic-based resin, a styrene/(meth)acrylic-based resin, a urethane resin, and a polyester resin, and is more preferably one or more selected from the group consisting of a (meth)acrylic-based resin and a styrene/(meth)acrylic-based resin, from the viewpoint of forming a high-quality printed image.

The water-insoluble resin may be a material synthesized using a known method or may be a commercially available product. Those listed as the water-insoluble resin may be used alone or in a combination of two or more.

The number average molecular weight of the pigment dispersing resin is preferably 5,000 or more, more preferably 7,000 or more, and even more preferably 10,000 or more, and is preferably 100,000 or less, more preferably 50,000 or less, and even more preferably 30,000 or less.

The number average molecular weight of the pigment dispersing resin is measured using the method described in "Examples".

If the colorant-containing ink is in the form (d) in which the pigment is coated with a water-insoluble resin having a cross-linked structure, the aforementioned constituent component of a polymer having a linear two-dimensional structure, which may include branched chains, of the water-insoluble resin that is used to disperse the pigment as the pigment dispersing resin has a number average molecular weight that is preferably 5,000 or more, more preferably 7,000 or more, and even more preferably 10,000 or more, and is preferably 100,000 or less, more preferably 50,000 or less, and even more preferably 30,000 or less.

The acid value of the pigment dispersing resin is preferably 5 mg KOH/g or more, more preferably 50 mg KOH/g or more, even more preferably 70 mg KOH/g or more, and even more preferably 90 mg KOH/g or more, and is preferably 800 mg KOH/g or less, more preferably 500 mg KOH/g or less, and even more preferably 300 mg KOH/g or less.

The acid value of the pigment dispersing resin can be determined using the method described in "Examples", but can also be calculated from the mass ratio of the constituent monomers. If the pigment dispersing resin has a cross-linked structure, the acid value of the pigment dispersing resin can be calculated from the mass ratio of the constituent monomers and the crosslinking agent.

[Fixing Resin]

The colorant-containing ink may contain a resin functioning as a fixing aid (hereinafter, also referred to as a "fixing resin"), from the viewpoint of forming a high-quality printed image. The form of the fixing resin present in the colorant-containing ink is preferably that of a resin not coating the pigment, and more preferably that of a resin particle not containing pigment.

There is no particular limitation on the fixing resin, and it can be selected as appropriate according to the purpose. Specific examples of the fixing resin include a urethane resin, a polyester resin, an acrylic-based resin, a vinyl acetate-based resin, a styrene-based resin, a butadiene-based resin, a styrene/butadiene-based resin, a vinyl chloride-based resin, a styrene/acrylic-based resin, and an acrylic silicone-based resin.

The resin in a particulate form as the fixing resin can be mixed with a colorant, water, an organic solvent, and the like to obtain ink. The fixing resin may be a synthesized material or a commercially available product.

Those listed as the fixing resin may be used alone or in a combination of two or more.

[Wax]

The colorant-containing ink may contain a wax, from the viewpoint of forming a high-quality printed image.

In this specification, a "wax" means an organic substance that is solid or semi-solid at room temperature (25°C) and becomes liquid upon heating. In this example, the "wax being semi-solid" means that the wax deforms and flows when force is applied, but retains a certain shape when no force is applied. The temperature at which the wax becomes liquid upon heating, known as the melting point of the wax, is in the temperature range of 45°C or higher.

The wax may be either a natural wax or a synthetic wax.

The natural wax may be: a petroleum-based wax such as paraffin wax or microcrystalline wax; a plant-based wax such as carnauba wax, candelilla wax, or rice wax; an animal-based wax such as lanolin or beeswax; or the like.

The synthetic wax may be: a synthetic hydrocarbon-based wax such as polyolefin wax or Fischer-Tropsch wax; a silicone-based wax; a modified wax such as paraffin wax derivative, montan wax derivative, or microcrystalline wax derivative; or the like. In particular, it is preferably a polyolefin wax mainly composed of olefin-based monomer.

Those listed as the wax may be used alone or in a combination of two or more.

The colorant-containing ink preferably contains a wax as a dispersion (hereinafter, also referred to as a "wax dispersion").

There is no particular limitation on the wax dispersion, and examples thereof include those obtained by emulsifying the wax with a known surfactant. The surfactant may be a nonionic surfactant, an anionic surfactant, or the like.

The nonionic surfactant may be an ethylene oxide adduct of a higher alcohol, an ethylene oxide adduct of an alkylated phenol, or the like.

The anionic surfactant may be a sulfate ester salt or a phosphate ester salt based on an ethylene oxide adduct of a higher alcohol; an alkylated benzenesulfonate salt; or the like.

In particular, the wax dispersion is preferably a nonionic wax dispersion obtained by emulsifying the wax with a nonionic surfactant, and more preferably a nonionic polyolefin wax dispersion, from the viewpoint of improving the ejection stability of the ink, the image fastness of the printed material, and the like.

Preferred examples of commercially available products of the wax dispersion include "Hytec E" series manufactured by Toho Chemical Industry Co., Ltd., "AQUACER" series manufactured by BYK, "Selosol" series manufactured by Chukyo Yushi Co., Ltd., and "Chemipearl" series manufactured by Mitsui Chemicals, Inc.

[Water]

The medium of the colorant-containing ink is preferably an aqueous medium. That is to say, the colorant-containing ink is preferably an aqueous ink containing water.

In this example, the term "aqueous" means that water occupies the largest proportion by mass in the medium of the colorant-containing ink.

The water contained in the colorant-containing ink is preferably ion-exchanged water, ultrafiltrated water, reverse-osmosis water, or distilled water.

[Water-Soluble Organic Solvent]

The colorant-containing ink may further contain a water-soluble organic solvent as an aqueous medium. The water-soluble organic solvent contained in the ink may be: a polyhydric alcohol; an ether such as a polyhydric alcohol alkyl ether, a polyhydric alcohol aryl ether, or a polyhydric alcohol aralkyl ether; a nitrogen-containing heterocyclic compound; an amide; an amine; a sulfur-containing compound; or the like.

The content of the water in the aqueous medium in the colorant-containing ink is preferably 51% by mass or more, more preferably 55% by mass or more, even more preferably 60% by mass or more, and even more preferably 65% by mass or more, and is preferably 95% by mass or less, more preferably 90% by mass or less, even more preferably 85% by mass or less, and even more preferably 80% by mass or less, from environmental viewpoints.

The colorant-containing ink may contain a surfactant, a defoaming agent, a preservative and antifungal agent, a rust inhibitor, a pH adjuster, and the like, as necessary.

[Composition of Colorant-Containing Ink]

The content of the colorant in the colorant-containing ink is preferably 2% by mass or more, and more preferably 3% by mass or more, and is preferably 20% by mass or less, more preferably 15% by mass or less, and even more preferably 10% by mass or less, from the viewpoint of improving the image density of the printed material.

If the colorant-containing ink contains a pigment as the colorant, the content of the pigment in the ink is preferably 2% by mass or more, and more preferably 3% by mass or more, and is preferably 20% by mass or less, more preferably 15% by mass or less, and even more preferably 10% by mass or less, from the viewpoint of improving the image density of the printed material.

If the colorant-containing ink contains a pigment dispersing resin, the content of the pigment dispersing resin in the ink is preferably 2% by mass or more, and more preferably 4% by mass or more, from the viewpoint of the dispersion stability of the pigment and from the viewpoint of forming a high-quality printed image. Also, the content is preferably 20% by mass or less, more preferably 15% by mass or less, and even more preferably 10% by mass or less, from the viewpoint of improving the image density of the printed material.

If the colorant-containing ink contains a pigment dispersing resin, the mass ratio of the content of the pigment to the content of the pigment dispersing resin in the ink [pigment/pigment dispersing resin] is preferably 0.30 or more, more preferably 0.50 or more, and even more preferably 0.70 or more, from the viewpoint of improving the image density of the printed material. Also, the mass ratio is preferably 1.00 or less, more preferably 0.90 or less, and even more preferably 0.80 or less, from the viewpoint of the dispersion stability of the pigment and from the viewpoint of forming a high-quality printed image.

If the colorant-containing ink contains a fixing resin, the content of the fixing resin in the ink is preferably 0.5% by mass or more, more preferably 1% by mass or more, and even more preferably 3% by mass or more, from the viewpoint of forming a high-quality printed image. Also, the content is preferably 10% by mass or less, and more preferably 7% by mass or less, from the viewpoint of improving the image density of the printed material.

If the colorant-containing ink contains a wax, the content of the wax in the ink is preferably 0.3% by mass or more, more preferably 0.5% by mass or more, and even more preferably 0.8% by mass or more, and is preferably 7% by mass or less, more preferably 5% by mass or less, and even more preferably 3% by mass or less, from the viewpoint of forming a high-quality printed image.

If the colorant-containing ink contains a water-soluble organic solvent, the content of the water-soluble organic solvent in the ink is preferably 5% by mass or more, more preferably 10% by mass or more, and even more preferably 15% by mass or more, and is preferably 45% by mass or less, more preferably 40% by mass or less, even more preferably 30% by mass or less, and even more preferably 20% by mass or less, from the viewpoint of forming a high-quality printed image.

The content of the water in the colorant-containing ink is preferably 40% by mass or more, more preferably 45% by mass or more, even more preferably 50% by mass or more, and even more preferably 60% by mass or more, and is preferably 85% by mass or less, more preferably 80% by mass or less, and even more preferably 75% by mass or less, from environmental viewpoints.

(Line-Head Type Inkjet Method)

The inkjet method for use in the printing method of the present invention is performed using a line-head type print head.

A line-head type print head is equipped with a head capable of inkjet printing across a width greater than or equal to the length in a direction that is perpendicular to the printing medium's conveying direction, and moves only the printing medium while keeping the print head stationary, and thus it can perform high-speed printing.

The line-head type print head may include a plurality of individual heads arranged in a line. The line-head type print head is preferably provided for each color of the colorant-containing ink.

The nozzle pitch of the line-head type print head is preferably 120 npi or more, more preferably 180 npi or more, even more preferably 300 npi or more, and even more preferably 600 npi or more, from the viewpoint of forming a high-quality printed image. Also the nozzle pitch is preferably 6000 npi or less, more preferably 3600 npi or less, even more preferably 2400 npi or less, and even more preferably 1600 npi or less., from the foregoing viewpoints.

In the present invention, the unit "npi" indicating the nozzle pitch of the line-head type print head means the number of nozzles per inch in the longitudinal direction of the nozzle array of the print head.

Various ejection methods are available for print heads. In the printing method of the present invention, either a piezoelectric method using piezoelectric elements or a thermal method using thermal elements may be used. In particular, the ejection method of the print head is preferably a piezoelectric method, from the viewpoint of forming a high-quality printed image.

The conveying speed of the printing medium in the present invention is preferably 10 m/min or more, more preferably 15 m/min or more, and even more preferably 20 m/min or more, from the viewpoint of efficiently obtaining a printed material. Also, the conveying speed is preferably 100 m/min or less, more preferably 80 m/min or less, and even more preferably 60 m/min or less, from the viewpoint of forming a high-quality printed image.

The amount of droplets of the colorant-containing ink ejected in the present invention is preferably 1 pL or more, more preferably 1.5 pL or more, and even more preferably 2 pL or more, and is preferably 15 pL or less, more preferably 10 pL or less, even more preferably 7.5 pL or less, and even more preferably 5 pL or less, from the viewpoint of forming a high-quality printed image.

In this example, one "pL (picoliter)" denotes $10^{-12}$ of one "L (liter)".

The amount of droplets of the colorant-containing ink ejected can be set by the inkjet head control device.

The resolution in a direction that is parallel to the printing medium's conveying direction in the present invention, that is, the density of ink dots on the printing medium is preferably 600 dpi or more, more preferably 800 dpi or more, and even more preferably 1000 dpi or more, and, from the foregoing viewpoints, the resolution is preferably 3600 dpi or less, more preferably 2400 dpi or less, even more preferably 1800 dpi or less, and even more preferably 1200 dpi or less.

The resolution in a direction that is perpendicular to the printing medium's conveying direction in the present invention, that is, the density of ink dots on the printing medium is preferably 600 dpi or more, more preferably 800 dpi or more, and even more preferably 1000 dpi or more, and, from the foregoing viewpoints, the resolution is preferably 3600 dpi or less, more preferably 2400 dpi or less, even more preferably 1800 dpi or less, and even more preferably 1200 dpi or less.

In the present invention, the unit "dpi" indicating the resolution means the number of ink dots per inch in a direction that is parallel or perpendicular to the printing medium's conveying direction.

If the resolution differs for each ink color, the resolution with the highest value is considered the resolution for the present invention.

The diameter of ink dots formed by ink that has landed on the printing medium in the present invention (hereinafter, also referred to simply as an "ink dot diameter") is preferably 20 $\mu$m or more, more preferably 23 $\mu$m or more, and even more preferably 25 $\mu$m or more, from the viewpoint of forming a high-quality printed image. Also, the ink dot diameter is preferably 60 $\mu$m or less, more preferably 55 $\mu$m or less, and even more preferably 50 $\mu$m or less, from the foregoing viewpoints.

The ink dot diameter on the printing medium can be determined, as described in "Examples", by applying ink onto the printing medium through inkjet printing, observing the formed ten ink dots using a microscope, and calculating their average value as the ink dot diameter.

The amount of the colorant-containing ink applied to the region to be the dark image forming region in Step 2 is preferably 1 g/m$^2$ or more, more preferably 3 g/m$^2$ or more, and even more preferably 4.5 g/m$^2$ or more, from the viewpoint of suppressing the streak occurrence in the obtained printed material and improving the clarity of the printed image. Also, the amount is preferably 10 g/m$^2$ or less, more preferably 7 g/m$^2$ or less, and even more preferably 5 g/m$^2$ or less, from the foregoing viewpoints.

<Step 3>

In the present invention, it is preferable to further include Step 3 of applying a white ink containing a white pigment (hereinafter, also referred to simply as a "white ink") to the printing medium or the face of the printing medium to which the colorant-containing ink has been applied, before Step 1 or after Step 2, from the viewpoint of clarifying the outline of the dark image forming region and forming a high-quality printed image.

If Step 3 is further included, it is preferable to apply the white ink after Step 2 to the face opposite to the face of the printing medium to which the colorant-containing ink has been applied (i.e., the printing medium itself) or the face of the printing medium to which the colorant-containing ink has been applied.

If a resin film is used as the low-absorbency printing medium, and a mirror image obtained by reversing the desired printed image such that the intended image is visible when viewed from the opposite side of the printed image forming face of the non-absorbency film is formed as a printed image on the printing medium, it is preferable to apply the white ink in Step 3 to the entire face of the printing medium to which the colorant-containing ink has been applied.

The pigment for the white ink may be a white inorganic pigment such as titanium oxide, zinc oxide, zinc sulfide, antimony oxide, or zirconium oxide, and it is preferably one or more selected from the group consisting of titanium oxide and zinc oxide, and more preferably titanium oxide (C.I. Pigment White 6), from the viewpoint of enhancing whiteness and improving the sharpness of the knockout text.

The titanium oxide may be used in an untreated state, but is preferably in a surface treated state from the viewpoint of achieving good dispersibility. The surface treatment for the titanium oxide may be surface treatment using an inorganic substance, surface treatment using an organic substance such as a titanium coupling agent, a silane coupling agent, or silicone oil, but it is preferably surface treatment using an inorganic substance.

In the present invention, the white pigment is dispersed in a medium in the white ink. The form of the white pigment in the white ink may be a form in which the pigment is dispersed using the aforementioned pigment dispersing resin or surfactant as a dispersant, or a self-dispersing form in which the pigment is dispersed without using a dispersant. In particular, the form of the pigment in the white ink is preferably a form in which the pigment is dispersed using the pigment dispersing resin. The pigment dispersing resin is preferably similar to the resins given as examples in the aforementioned colorant-containing ink. The white ink may further contain the aforementioned fixing resin.

The medium of the white ink is preferably an aqueous medium. That is to say, white ink is preferably an aqueous ink containing water.

In this example, the term "aqueous" means that water occupies the largest proportion by mass in the medium of the white ink.

The water contained in the white ink is preferably ion-exchanged water, ultrafiltrated water, reverse-osmosis water, or distilled water.

Furthermore, the white ink may also contain a wax, a water-soluble organic solvent, a surfactant, a defoaming agent, a preservative and antifungal agent, a rust inhibitor, a pH adjuster, and the like, as necessary.

The preferred range for the content of each component such as the white pigment in the white ink is similar to the preferred range for the content of each component such as the colorant in the colorant-containing ink described above.

Examples of the method for applying the white ink in Step 3 may be roller coating, spray coating, brush coating, inkjet coating, or the like. In particular, it is preferably one selected from the group consisting of roller coating and inkjet coating, from the viewpoint of enabling simple and uniform application of the white ink.

Specific examples of a roller used for the roller coating include an offset gravure coater, a gravure coater, a doctor coater, a bar coater, a blade coater, a flexo coater, and a roll coater. In particular, it is preferably one or more selected from the group consisting of a doctor coater, a bar coater, and a roll coater.

Specific examples of the inkjet coating preferably include those using a line-type inkjet method.

Furthermore, the apparatus that is used to apply the white ink to the printing medium or the printed image forming face in Step 3 is preferably those in which a means for applying the pretreatment liquid that is used in Step 1 and a means for applying the colorant-containing ink that is used in Step 2 are integrated, from the viewpoint of enabling Steps 1 to 3 to be performed successively. In this case, for example, a means for applying the white ink such as a roller coating device may be incorporated inside the inkjet printing apparatus, or an inkjet head for applying the white ink may be incorporated inside the inkjet printing apparatus.

The amount of the white ink applied to the printing medium in Step 3 is preferably 1 $g/m^2$ or more, more preferably 5 $g/m^2$ or more, and even more preferably 10 $g/m^2$ or more, from the viewpoint of forming a high-quality printed image. Also, the amount is preferably 50 $g/m^2$ or less, more preferably 30 $g/m^2$ or less, even more preferably 15 $g/m^2$ or less, from the foregoing viewpoints.

If the printing method of the present invention includes Step 3, Step 3 preferably includes a step of, after applying the white ink to the printing medium or the face of the printing medium to which the colorant-containing ink has been applied, maintaining the printing medium to which the white ink has been applied, at 25°C or higher, from the viewpoint of forming a high-quality printed image. This step has the effect of removing volatile components in the white ink from the printing medium to which the white ink has been applied or the printed material, and can dry the printing medium or the printed material (hereinafter, the step of maintaining the printing medium to which the white ink has been applied, at 25°C or higher in Step 3 is also referred to as a "drying step of Step 3").

In Step 3, the method for maintaining the printing medium to which the white ink has been applied, at 25°C or higher may be static holding, air blowing, heating, reducing the pressure, or the like. In the printing method of the present invention, the application of active energy rays such as ultraviolet rays or radiation is not included in the drying step of Step 3 of the present invention.

The temperature at which the printing medium is maintained in the drying step of Step 3 is preferably 120°C or lower, more preferably 100°C or lower, even more preferably 90°C or lower, and even more preferably 80°C or lower, from the viewpoint of suppressing deformation of the printing medium. Also, the temperature is preferably 25°C or higher, and more preferably 30°C or higher, from the viewpoint of enabling rapid drying.

The duration for which the printing medium is maintained at the specified temperature (maintaining time) in the drying step of Step 3 is preferably 0.5 seconds or longer, more preferably 1 second or longer, even more preferably 3 seconds or longer, and even more preferably 5 seconds or longer, and is preferably 30 minutes or shorter, more preferably 20 minutes or shorter, even more preferably 10 minutes or shorter, and even more preferably 1 minute or shorter.

The inkjet printing apparatus of the present invention is an inkjet printing apparatus for use in the inkjet printing method of the present invention, and includes an inkjet head charged with the pretreatment liquid, and an inkjet head charged with the colorant-containing ink.

In the inkjet printing apparatus of the present invention, the pretreatment liquid and the colorant-containing ink are synonymous with the pretreatment liquid and the colorant-containing ink that are used in the aforementioned printing method of the present invention.

In the inkjet printing apparatus of the present invention, the number of inkjet heads charged with the colorant-containing ink may be one, or two or more, but it is preferable to use a plurality of inkjet heads, from the viewpoint of using a plurality of colorant-containing inks.

Furthermore, it is preferable that the inkjet printing apparatus of the present invention further includes an inkjet head charged with a white ink containing a white pigment, in addition to the inkjet head charged with the pretreatment liquid and the inkjet head charged with the colorant-containing ink. That is to say, the inkjet printing apparatus of the present invention preferably includes the inkjet head charged with the pretreatment liquid, the inkjet head charged with the colorant-containing ink, and the inkjet head charged with the white ink containing the white pigment, and more preferably includes the inkjet head charged with the pretreatment liquid, a plurality of inkjet heads charged with colorant-containing inks, and the inkjet head charged with the white ink containing the white pigment.

The inkjet printing apparatus of the present invention can be preferably used in the aforementioned printing method of the present invention or in a printed material producing method of the present invention, which will be described later.

The inkjet printing ink set of the present invention is an inkjet printing ink set for use in the inkjet printing method of the present invention, and includes a pretreatment liquid and a colorant-containing ink.

In the inkjet printing ink set of the present invention, the pretreatment liquid and the colorant-containing ink are synonymous with the pretreatment liquid and the colorant-containing ink that are used in the aforementioned printing method of the present invention.

In the inkjet printing ink set of the present invention, the number of colorant-containing inks may be one, or two or more, but it is preferable to use a plurality of colorant-containing inks. It is preferable that the inkjet printing ink set of the present invention further includes a white ink containing a white pigment, in addition to the pretreatment liquid and the colorant-containing ink. That is to say, the inkjet printing ink set of the present invention preferably includes the pretreatment liquid, the colorant-containing ink, and the white ink containing the white pigment, and more preferably includes the pretreatment liquid, a plurality of colorant-containing inks, and the white ink containing the white pigment.

The inkjet printing ink set of the present invention can be preferably used in the aforementioned printing method of the present invention or in a printed material producing method of the present invention, which will be described later.


[Printed Material Producing Method]

The printed material according to the present invention can be obtained using the aforementioned printing method of the present invention.

That is to say, the printed material producing method of the present invention for forming, on a printing medium, a printed image containing a dark image forming region and a light image forming region, wherein a printing duty of a colorant-containing ink in the dark image forming region is larger than that in the light image forming region, includes:

> Step 1: a step of applying a pretreatment liquid to an outer edge portion of a region to be the dark image forming region, thereby obtaining a printing medium having a pretreatment liquid applied portion; and
> Step 2: a step of applying, using a line-head type inkjet method, the colorant-containing ink to the region to be the dark image forming region on a face having the pretreatment liquid applied portion of the printing medium obtained in Step 1.

In the printed material producing method of the present invention, Steps 1 and 2 mentioned above are synonymous with Steps 1 and 2 of the aforementioned printing method of the present invention.

Furthermore, it is preferable that the printed material producing method of the present invention further includes Step 3 of applying a white ink to the printing medium or the face of the printing medium to which the colorant-containing ink has been applied, before Step 1 or after Step 2. In the printed material producing method of the present invention, Step 3 mentioned above is synonymous with Step 3 of the aforementioned printing method of the present invention.

Since the printed material producing method of the present invention has the above-described features, it is possible to suppress the streak occurrence in the obtained printed material and achieve excellent clarity of a printed image containing a dark image forming region and a light image forming region.

The present invention further includes the following aspects.

<1> An inkjet printing method for forming, on a printing medium, a printed image containing a dark image forming region and a light image forming region, wherein a printing duty of a colorant-containing ink in the dark image forming region is larger than that in the light image forming region, including:

Step 1: a step of applying a pretreatment liquid to an outer edge portion of a region to be the dark image forming region, thereby obtaining a printing medium having a pretreatment liquid applied portion; and

Step 2: a step of applying, using a line-head type inkjet method, the colorant-containing ink to the region to be the dark image forming region on a face having the pretreatment liquid applied portion of the printing medium obtained in Step 1.

<2> An inkjet printing method for forming, on a printing medium, a printed image containing a dark image forming region and a light image forming region, wherein a printing duty of a colorant-containing ink in the dark image forming region is larger than that in the light image forming region, including:

Step 1: a step of applying a pretreatment liquid to an outer edge portion of a region to be the dark image forming region, and maintaining the printing medium to which the pretreatment liquid has been applied, at 25°C or higher, thereby obtaining a printing medium having a pretreatment liquid applied portion; and,

Step 2: a step of applying, using a line-head type inkjet method, the colorant-containing ink to the region to be the dark image forming region on a face having the pretreatment liquid applied portion of the printing medium obtained in Step 1.

<3> An inkjet printing method for forming, on a printing medium, a printed image containing a dark image forming region and a light image forming region, wherein a printing duty of a colorant-containing ink in the dark image forming region is larger than that in the light image forming region, including:

Step 1: a step of applying a pretreatment liquid to an outer edge portion of a region to be the dark image forming region, and drying the printing medium to which the pretreatment liquid has been applied, thereby obtaining a printing medium having a pretreatment liquid applied portion; and

Step 2: a step of applying, using a line-head type inkjet method, the colorant-containing ink to the region to be the dark image forming region on a face having the pretreatment liquid applied portion of the printing medium obtained in Step 1.

<4> An inkjet printing method for forming, on a printing medium, a printed image containing a dark image forming region and a light image forming region, wherein a printing duty of a colorant-containing ink in the dark image forming region is larger than that in the light image forming region, including:

Step 1: a step of applying a pretreatment liquid to an outer edge portion of a region to be the dark image forming region, and solidifying the pretreatment liquid applied portion, thereby obtaining a printing medium having a pretreatment liquid applied portion; and

Step 2: a step of applying, using a line-head type inkjet method, the colorant-containing ink to the region to be the dark image forming region on a face having the pretreatment liquid applied portion of the printing medium obtained in Step 1.

<5> The inkjet printing method according to any one of <1> to <4>, wherein the printing medium is a low-absorbency printing medium.

<6> The inkjet printing method according to <5>, wherein the non-absorbency printing medium is a resin film.

<7> The inkjet printing method according to <6>, wherein the resin film is a polyester film.

<8> The inkjet printing method according to any one of <1> and <3> to <7>, wherein Step 1 includes a step of maintaining the printing medium to which the pretreatment liquid has been applied, at 25°C or higher.

<9> The inkjet printing method according to any one of <1>, <2>, and <4> to <7>, wherein Step 1 includes a step of drying the printing medium to which the pretreatment liquid has been applied.

<10> The inkjet printing method according to any one of <1> to <3> and <5> to <7>, wherein Step 1 includes a step of solidifying the pretreatment liquid applied portion.

<11> The inkjet printing method according to any one of <1> to <10>, wherein Step 1 includes a step of maintaining the printing medium to which the pretreatment liquid has been applied, at 40°C to 100°C for 1.5 seconds to 1 minute, thereby drying the pretreatment liquid, and solidifying the pretreatment liquid.

<12> The inkjet printing method according to any one of <1> to <11>, wherein the pretreatment liquid contains one or more selected from the group consisting of an aggregative compound (A1) and a hydrophobic compound (A2).

<13> The inkjet printing method according to <12>, wherein the aggregative compound (A1) is one or more selected from the group consisting of a metal salt, an organic acid or a salt thereof, and a cationic resin.

<14> The inkjet printing method according to <13>, wherein the aggregative compound (A1) is calcium nitrate.

<15> The inkjet printing method according to <13>, wherein the aggregative compound (A1) is malonic acid.

<16> The inkjet printing method according to <13>, wherein the aggregative compound (A1) is a diallyldimethylammonium chloride polymer.

<17> The inkjet printing method according to <12>, wherein the hydrophobic compound (A2) is one or more selected from the group consisting of an anionic resin and a hydrophobic surfactant.

<18> The inkjet printing method according to <13>, wherein the anionic resin is one or more selected from the group consisting of an anionic vinyl resin, an anionic urethane resin, and an anionic silicone resin.

<19> The inkjet printing method according to <12>, wherein the hydrophobic compound (A2) is a crosslinking acrylic acid/styrene resin.

<20> The inkjet printing method according to any one of <1> to <19>, wherein the outer edge portion of the region to be the dark image forming region is a portion within a range of 0.01 mm or more and 1 mm or less on the side away from the dark image forming region, starting from a boundary line between the dark image forming region and the light image forming region.

<21> The inkjet printing method according to <20>, wherein the outer edge portion is a portion within a range of 0.1 mm or more and 0.4 mm or less on the side away from the dark image forming region, starting from the boundary line between the dark image forming region and the light image forming region.

<22> The inkjet printing method according to any one of <1> to <21>, wherein Step 1 includes applying the pretreatment liquid further to an inner edge portion of the region to be the dark image forming region.

<23> The inkjet printing method according to any one of <1> to <22>, wherein the inner edge portion of the region to be the dark image forming region is a portion within a range of 0.01 mm or more and 1 mm or less on the side away from the light image forming region, starting from a boundary line between the dark image forming region and the light image forming region.

<24> The inkjet printing method according to <23>, wherein the inner edge portion is a portion within a range of 0.2 mm or more and 0.4 mm or less on the side away from the light image forming region, starting from a boundary line between the dark image forming region and the light image forming region.

<25> The inkjet printing method according to any one of <1> to <24>, wherein a difference between the printing duty of the colorant-containing ink in the dark image forming region and that in the light image forming region is 50% or more.

<26> The inkjet printing method according to <25>, wherein a difference between the printing duty of the colorant-containing ink in the dark image forming region and that in the light image forming region is 90% or more.

<27> The inkjet printing method according to <25>, wherein a difference between the printing duty of the colorant-containing ink in the dark image forming region and that in the light image forming region is 100%.

<28> The inkjet printing method according to any one of <1> to <27>, wherein the printing duty of the colorant-containing ink in the light image forming region is 0%.

<29> The inkjet printing method according to any one of <1> to <28>, wherein the printed image is a knockout text image.

<30> The inkjet printing method according to any one of <1> to <29>, further including Step 3 of applying a white ink containing a white pigment to the printing medium or the face of the printing medium to which the colorant-containing ink has been applied, before Step 1 or after Step 2.

<31> The inkjet printing method according to any one of <1> to <30>, wherein the printing duty of the colorant-containing ink in the light image forming region is more than 0%, and in Step 1, the pretreatment liquid is applied not only to the outer edge portion of the region to be the dark image forming region but also to a portion to which the colorant-containing ink is not applied in a region to be the light image forming region.

<32> An inkjet printing apparatus for use in the inkjet printing method according to any one of <1> to <31>, including:

   an inkjet head charged with the pretreatment liquid; and
   an inkjet head charged with the colorant-containing ink.

<33> An inkjet printing ink set for use in the inkjet printing method according to any one of <1> to <32>, including:

   the pretreatment liquid; and
   the colorant-containing ink.

<34> A printed material producing method for forming, on a printing medium, a printed image containing a dark image forming region and a light image forming region, wherein a printing duty of a colorant-containing ink in the dark image forming region is larger than that in the light image forming region, including:

Step 1: a step of applying a pretreatment liquid to an outer edge portion of a region to be the dark image forming region, thereby obtaining a printing medium having a pretreatment liquid applied portion; and
Step 2: a step of applying, using a line-head type inkjet method, the colorant-containing ink to the region to be the dark image forming region on a face having the pretreatment liquid applied portion of the printing medium obtained in Step 1.

Examples

In the following preparation examples, production examples, examples, and comparative examples, "parts" is "parts by mass" and "%" is "% by mass", unless otherwise specified. The physical properties and the like are measured as follows.
The physical properties of a resin and the like were measured as follows.

[Measurement of Number Average Molecular Weight and Weight Average Molecular Weight of Resin]

These physical properties were determined using gel permeation chromatography. The measurement conditions are shown below.

GPC device: "HLC-8320GPC" manufactured by Tosoh Corporation
Column: "TSKgel SuperAWM-H", "TSKgel SuperAW3000", "TSKgel guardcolum Super AW-H", all manufactured by Tosoh Corporation
Eluant: Solution obtained by dissolving phosphoric acid and lithium bromide to concentrations of 60 mmol/L and 50 mmol/L respectively in N,N-dimethylformamide.
Flow rate: 0.5 mL/min
Standard sample: Monodisperse polystyrene kits with known molecular weight [PStQuick B (F-550, F-80, F-10, F-1, A-1000), PStQuick C (F-288, F-40, F-4, A-5000, A-500)] (all manufactured by Tosoh Corporation)
Measurement sample: 0.1 g of resin was mixed with 10 mL of the aforementioned eluent in a glass vial. The mixture was stirred at 25°C for 10 hours using a magnetic stirrer. The mixture was then filtered using a syringe filter "DISMIC-13HP" (made of PTFE, 0.2 pm, manufactured by Advantec Co., Ltd.), and the number average molecular weight or the weight average molecular weight of the resin was calculated.

[Measurement of Acid Value of Resin]

A resin was dissolved in a titrant obtained by mixing toluene and acetone (2:1) in the case in which it did not have a cross-linked structure, or was dispersed in the titrant in the case in which it had a cross-linked structure. Titration was performed using 0.1 N potassium hydroxide/ethanol solution by potentiometric titration using an automatic potentiometric titrator (manufactured by Kyoto Electronics Manufacturing Co., Ltd., piston burette, model No.: APB-610), and the inflection point on the titration curve was taken as the endpoint. The acid value (mg KOH/g) was calculated from the volume of potassium hydroxide solution titrated to the endpoint.

[Measurement of Solid Content Concentration]

10.0 g of sodium sulfate dried to constant weight in a desiccator was weighed into a 30 mL polypropylene container ($\varphi$ = 40 mm, height = 30 mm), and approximately 1.0 g of sample was added and mixed therewith. The total mass was then accurately weighed. The mixture was maintained at 105°C for 2 hours to remove volatile components, and then allowed to stand in a desiccator for 15 minutes. The mass after this processing was measured. The mass of the sample after the volatile components were removed was taken as the solid content, and this solid content was divided by the mass of the added sample to determine the solid content concentration (%).

[Measurement of Average Particle Sizes of Pigment-Free Resin Particles and Pigment-Containing Resin Particles]

Cumulant analysis was performed using a laser particle size analyzer "ELS-8000" (manufactured by Otsuka Electronics Co., Ltd.), and the obtained cumulant average particle size was taken as the average particle size of the pigment-free resin particles or the pigment-containing resin particles. A dispersion diluted with water such that the concentration of the particles to be measured was $5 \times 10^{-3}$% by mass (in terms of solid content concentration) was used as the measurement sample. Measurement conditions were as follows: temperature 25°C, angle between incident light and detector 90°, and integration count 100. The refractive index of water (1.333) was entered as the refractive index of the dispersion medium.

[Measurement of Static Surface Tension of Organic Solvent (B) at 25°C]

A platinum plate was immersed in a cylindrical polyethylene container (diameter 3.6 cm × depth 1.2 cm) containing 5 g of the sample adjusted to 25°C. The static surface tension at 25°C was measured using the Wilhelmy method with a surface tensiometer ("CBVP-Z" manufactured by Kyowa Interface Science Co., Ltd.).

Production Example 1 (Production of Acrylic Acid/Styrene Resin)

A monomer mixture solution was prepared by mixing 31 parts acrylic acid and 69 parts of styrene.

10 parts of methyl ethyl ketone (hereinafter, referred to as "MER"), 0.2 parts of 2-mercaptoethanol as a polymerization chain transfer agent, and 10% of the aforementioned monomer mixture solution were placed in a reaction vessel and mixed. This mixture was thoroughly purged with nitrogen.

Meanwhile, a mixture solution of the remaining portion of the aforementioned monomer mixture solution (90% of the monomer mixture solution), 0.13 parts of the polymerization chain transfer agent, 30 parts of MEK, and 1.1 parts of 2,2'-azobis(2,4-dimethylvaleronitrile) ("V-65" manufactured by FUJIFILM Wako Pure Chemical Corporation) as an azo-based radical polymerization initiator was placed in a dropping funnel. Under a nitrogen atmosphere, the monomer mixture solution in the reaction vessel was stirred while the temperature was raised to 65°C. The mixture solution in the dropping funnel was then added dropwise over 3 hours. After the completion of the dropwise addition, the temperature was kept at 65°C for 2 hours. Subsequently, a solution obtained by dissolving 0.1 parts of the polymerization initiator in 2 parts of MEK was added, followed by further aging at 65 °C for 2 hours and at 70°C for another 2 hours. Finally, the product was dried under reduced pressure, and thus an acrylic acid/styrene resin (number average molecular weight: 19,000, acid value: 240 mg KOH/g) was obtained.

Production Example 2 (Production of Aqueous Dispersion of Crosslinking Acrylic Acid/Styrene Resin)

15.3 parts of the acrylic acid/styrene resin obtained in Production Example 1 was mixed with 63.5 parts of ion-exchanged water, and 1.8 parts of 25% ammonia water was further added thereto, and thus the mixture was neutralized such that the molar ratio of ammonia to carboxy groups in the acrylic acid/styrene resin was 40% (degree of neutralization: 40 mol%). This neutralized mixture was heated to 90°C using a water bath, stirred for 1 hour to disperse the acrylic acid/styrene resin in water, then cooled to room temperature (25°C), and thus an acrylic acid/styrene resin dispersion was obtained.

4.6 parts of trimethylolpropane polyglycidyl ether ("Denacol EX-321LT" manufactured by Nagase ChemteX Corporation, epoxy equivalent: 140) was added as the cross-linking agent to the obtained acrylic acid/styrene resin dispersion. The mixture was sealed tightly and heated at 90°C for 1.5 hours while stirring with a stirrer. At this time, the crosslinking was performed using an amount of crosslinking agent corresponding to the epoxy equivalent sufficient to react with 50% of the total carboxy groups contained in the acrylic acid/styrene resin (crosslinking degree: 50%). The dispersion was then cooled to room temperature (25°C), and filtered through a membrane filter with a pore size of 5 μm ("Minisart" manufactured by Sartorius, material: cellulose acetate) attached to a 25 mL needle-free syringe (manufactured by Terumo Corporation). Ion-exchanged water was added to adjust the solid content concentration to 20%, and thus an aqueous dispersion of a crosslinking acrylic acid/styrene resin (acid value: 120 mg KOH/g) was obtained.

Preparation Examples 1 to 8

Each component of the pretreatment liquid was added to a container equipped with a stirrer according to the composition shown in Table 1. After mixing at 25°C for 1 hour, the mixture was filtered through the membrane filter with a pore size of 5 pm and the needle-free syringe, and thus each pretreatment liquid was obtained.

The components shown in Table 1 are as follows.

Wetting/Spreading-Suppressing Component (A)

Aggregative Compound (A1)

(Cationic Resin)

Cationic vinyl resin A1-1: "PAS-H-1L" manufactured by Nittobo Medical Co., Ltd. (diallyldimethylammonium chloride polymer)

(Metal Salt)

Calcium nitrate: calcium nitrate tetrahydrate (reagent manufactured by Tokyo Chemical Industry Co., Ltd.)
Note that the amount of calcium nitrate shown in Table 1 is the anhydride equivalent amount.

(Organic Acid)

Malonic acid: (reagent manufactured by FUJIFILM Wako Pure Chemical Corporation)

[Hydrophobic Compound (A2)]

(Anionic Resin)

Anionic vinyl resin A2-1: aqueous dispersion (solid content concentration: 20%) of the crosslinking acrylic acid/styrene resin (acid value: 120 mg KOH/g) obtained in Production Example 2
Anionic Vinyl Resin A2-2: "Joncryl 7100" manufactured by BASF (styrene/acrylic acid resin emulsion, acid value: 51 mg KOH/g, active content: 48%)
Anionic urethane resin A2-3: "NeoRez R-600" manufactured by Covestro (aliphatic urethane resin aqueous dispersion, acid value: 7 mg KOH/g, active content: 38%)
Anionic silicone resin A2-4: "Chaline Ru-911" (blend type (urethane blend) manufactured by Nissin Chemical Co., Ltd., form: aqueous emulsion, acid value: 2.2 mg KOH/g, active content: 36%)

Note that the amount of anionic resin (A2-1 to A2-4) is the active content equivalent amount.

(Hydrophobic Surfactant)

Surfynol 420: "Surfynol 420" manufactured by Nissin Chemical Co., Ltd. (EO adduct of 2,4,7,9-tetramethyl-5-decyne-4,7-diol with average number of moles of EO added of 1.3, HLB value: 6.4 (calculation formula: $20 \times ((34+44 \times 1.3)/(226+44 \times 1.3))))$

<Organic Solvent (B)>

Diethylene glycol monobutyl ether: (reagent manufactured by FUJIFILM Wako Pure Chemical Corporation, static surface tension at 25°C: 26.2 mN/m)
Propylene glycol: (reagent manufactured by FUJIFILM Wako Pure Chemical Corporation, static surface tension at 25°C: 36.0 mN/m)

(Hydrophilic Nonionic Surfactant)

Surfynol 465: "Surfynol 465" manufactured by Nissin Chemical Co., Ltd. (EO adduct of 2,4,7,9-tetramethyl-5-decyne-4,7-diol with an average number of moles of EO added of 10, HLB value: 14.2 (calculation formula: $20 \times ((34+44 \times 10)/(226+44 \times 10))))$
KF-6011: "KF-6011" (PEG-11 methyl ether dimeticone manufactured by Shin-Etsu Chemical Co., Ltd. (side-chain polyether-modified linear silicone), HLB value: 14.5 (catalog value))

[Table 1]

Table 1

| | | | | | Preparation Example | | | | | | | |
|---|---|---|---|---|---|---|---|---|---|---|---|---|
| | | | | | 1 | 2 | 3 | 4 | 5 | 6 | 7 | 8 |
| Type of pretreatment liquid | | | | | 1 | 2 | 3 | 4 | 5 | 6 | 7 | 8 |
| Blend composition (parts) of pretreatment liquid | Wetting/spreading-suppressing component (A) *1 | Aggregative compound (A1) | Cationic resin | Cationic vinyl resin A1-1 | 3.0 | | | | | | | |
| | | | Metal salt | Calcium nitrate | | 3.0 | | | | | | |
| | | | Organic acid | Malonic acid | | | 3.0 | | | | | |
| | | Hydrophobic compound (A2) | Anionic resin | Anionic vinyl resin A2-1 | | | | 3.0 | | | | |
| | | | | Anionic vinyl resin A2-2 | | | | | 3.0 | | | |
| | | | | Anionic urethane resin A2-3 | | | | | | 3.0 | | |
| | | | | Anionic silicone resin A2-4 | | | | | | | 3.0 | |
| | | | Hydrophobic surfactant | Surfynol 420 (HLB value: 6.4 (calculated value)) | | | | | | | | 3.0 |
| | Organic solvent (B) | | | Diethylene glycol monobutyl ether (static surface tension: 26.2 mN/m) | 10.0 | 10.0 | 10.0 | 10.0 | 10.0 | 10.0 | 10.0 | 10.0 |
| | | | | Propylene glycol (static surface tension: 36.0 mN/m) | 20.0 | 20.0 | 20.0 | 20.0 | 20.0 | 20.0 | 20.0 | 20.0 |
| | Hydrophilic nonionic surfactant | Hydrophilic acetylene-based surfactant | | Surfynol 465 (HLB value: 14.2 (calculated value)) | 0.20 | 0.20 | 0.20 | 0.20 | 0.20 | 0.20 | 0.20 | 0.20 |
| | | Hydrophilic silicone-based surfactant | | KF-6011 (HLB value: 14.5 (catalog value)) | 0.55 | 0.55 | 0.55 | 0.55 | 0.55 | 0.55 | 0.55 | 0.55 |
| | PH adjuster *2 | | | 25% Aqueous ammonia | | | | 1.00 | | | | |
| | Ion-exchanged water | | | | 66.3 | 66.3 | 66.3 | 65.3 | 66.3 | 66.3 | 66.3 | 66.3 |

*1: The amount of wetting/spreading-suppressing component (A) is the solid content equivalent amount.
*2: The amount of 25% aqueous ammonia is expressed as-is.

Production Example 3 (Production of Aqueous Dispersion of Black Pigment-Containing Cross-Linked Resin Particles)

100 parts of the acrylic acid/styrene resin obtained in Production Example 1 was mixed with 78.6 parts of MEK, and 41.2 parts of 5 N sodium hydroxide aqueous solution (sodium hydroxide content: 16.9%) was further added thereto as a neutralizing agent, and thus the mixture was neutralized (degree of neutralization: 40 mol%). 800 parts of ion-exchanged water and then 100 parts of black pigment (CB, C.I. Pigment Black 7, "Monarch 717" manufactured by Cabot Corporation) were further added. The mixture was stirred at 20°C for 60 minutes using a disperser ("Ultra Despa" manufactured by Asada Iron Works. Co., Ltd.) with the disperser blades rotating at 7000 rpm. Then, the obtained mixture was dispersed using Microfluidizer (product name, manufactured by Microfluidics) at a pressure of 200 MPa for 10 passes.

Then, 250 parts of ion-exchanged water was added to the obtained dispersion. After the mixture was stirred, MEK was removed under reduced pressure at 60°C, and a portion of the water was further removed to adjust the pigment concentration to 10%. 35.7 parts of trimethylolpropane polyglycidyl ether ("Denacol EX-321" manufactured by Nagase ChemteX Corporation, epoxy equivalent: 140) was added as the cross-linking agent to the resultant. The mixture was sealed tightly and heated at 70°C for 5 hours while stirring with a stirrer, and then cooled to room temperature (25°C), and thus an aqueous dispersion of black pigment-containing cross-linked resin particles (crosslinking degree: 60 mol%) (solid content concentration: 23.4%, pigment content: 9.7%, acid value: 96 mg KOH/g (calculated value)) was obtained.

Production Example 4 (Production of Aqueous Dispersion of Pigment-Free Resin Particles)

Monomers shown in "initial monomer solution" in Table 2, sodium polyoxyethylene alkyl ether sulfate ("Latemul E-118B" manufactured by Kao Corporation) (hereinafter, referred to as "Latemul E-118B") as a surfactant, potassium persulfate (manufactured by FUJIFILM Wako Pure Chemical Corporation) as a polymerization initiator, and ion-exchanged water were placed in a reaction vessel equipped with a dropping funnel. The mixture was purged with nitrogen, and thus an initial monomer solution was obtained. Monomers shown in "dropwise monomer solution" in Table 2, a surfactant, a polymerization initiator, and ion-exchanged water were mixed, and thus a dropwise monomer solution was obtained. This solution was placed in a dropping funnel and purged with nitrogen.

Under a nitrogen atmosphere, the initial monomer solution in the reaction vessel was stirred while being heated from room temperature (25°C) to 80°C over 30 minutes. While maintaining the temperature at 80°C, the monomers in the dropping funnel were gradually added dropwise into the reaction vessel over 3 hours. After completion of the addition, stirring was performed for 1 hour while maintaining the temperature in the reaction vessel. The mixture was then filtered through a 200-mesh filter, and thus an aqueous dispersion of pigment-free resin particles (solid content concentration: 44.1%, average particle size: 94 nm) was obtained.

The resin constituting the pigment-free resin particles had a weight average molecular weight of 750,000 and an acid value of 16 mg KOH/g.

[Table 2]

Table 2

| | | Production Example 4 |
|---|---|---|
| Initial monomer solution (parts) | Methacrylic acid | 0.5 |
| | Methyl methacrylate | 8.5 |
| | 2-Ethylhexyl acrylate | 11 |
| | Latemul E-118B | 11.1 |
| | Ion-exchanged water | 382.8 |
| | Potassium persulfate | 0.2 |

(continued)

|  |  | Production Example 4 |
|---|---|---|
| Dropwise monomer solution (parts) | Methacrylic acid | 9.5 |
|  | Methyl methacrylate | 161.5 |
|  | 2-Ethylhexyl acrylate | 209 |
|  | Latemul E-118B | 35.1 |
|  | Ion-exchanged water | 183 |
|  | Potassium persulfate | 0.6 |

Production Example 5 (Production of Black Ink Bk1)

A mixture solution obtained by adding 33.0 parts of the aqueous dispersion of black pigment-containing cross-linked resin particles obtained in Production Example 3 (solid content concentration: 23.4%, pigment content: 9.7%), 11.3 parts of the aqueous dispersion of pigment-free resin particles obtained in Production Example 4 (solid content concentration: 44.1%), 11.5 parts of propylene glycol (manufactured by FUJIFILM Wako Pure Chemical Corporation), 3.5 parts of diethylene glycol monoisobutyl ether (manufactured by FUJIFILM Wako Pure Chemical Corporation), 0.2 parts of polyether-modified silicone-based surfactant ("Silface SAG005" manufactured by Nissin Chemical Co., Ltd., HLB value: 7 (catalog value), kinematic viscosity: 170 mm$^2$/s (25°C)), 1.0 parts of acetylene glycol-based surfactant ("Surfynol 104PG-50" manufactured by Nissin Chemical Co., Ltd., propylene glycol solution of 2,4,7,9-tetramethyl-5-decyne-4,7-diol, active content: 50%, HLB value: 3.0 (calculation formula: $20 \times (34/226)$)), and ion-exchanged water in an amount to bring the total volume to 100 parts was filtered through the membrane filter and the needle-free syringe, and thus a black ink Bk1 was obtained.

Production Example 6 (Production of Aqueous Dispersion of White Pigment-Containing Resin Particles)

2500 g of polyacrylic acid ("Aron A-10SL" manufactured by Thagosei Co., Ltd., weight average molecular weight: 6,000, acid value: 735 mg KOH/g, solid content concentration: 40%) and 3.57 g of ion-exchanged water were placed in a 5 L plastic container. The container was cooled in an ice bath. While stirring the solution at 100 rpm, 1666.43 g of 5 N sodium hydroxide aqueous solution was slowly added to neutralize the solution. Ion-exchanged water was added to the neutralized aqueous solution to adjust the solid content concentration to 20%, and thus a neutralized aqueous solution of polyacrylic acid was obtained (degree of neutralization: 53 mol%, acid value: 735 mg KOH/g).
Then, 33.0 g of neutralized aqueous solution of polyacrylic acid (solid content concentration: 20%), 300 g of titanium oxide ("Tpaque CR-80" manufactured by Ishihara Sangyo Kaisha, Ltd., C.I. Pigment White 6, rutile structure, Al-Si treated, average particle size: 250 nm (catalog value)) as a white pigment, and 300 g of water were added to a 2 L plastic container (J bottle, round wide-opening, natural, manufactured by Nikko Hansen & Co., Ltd.) and 1000 g of zirconia beads were further added. The mixture was dispersed for 8 hours using a desktop pot mill stand (As One Corporation). The zirconia beads were removed using a metal mesh, and the solid content concentration was adjusted with ion-exchanged water, and thus an aqueous dispersion of white pigment-containing resin particles (solid content concentration: 51%, pigment content: 50%, polyacrylic acid content: 1%, average particle size 280 nm, pH: 7.6) was obtained.

Production Example 7 (Production of White Ink W2)

A mixture solution obtained by adding 20.0 g of the aqueous dispersion of white pigment-containing resin particles obtained in Production Example 6 (solid content concentration: 51%), 10.4 g of styrene/acrylic acid resin emulsion ("Joncryl 7100" manufactured by BASF, acid value: 51 mg KOH/g, solid content 48%), 3.0 g of diethylene glycol monoisobutyl ether (manufactured by Nippon Nyukazai Co., Ltd.), 30.0 g of propylene glycol, 3.0 g of acetylene glycol-based surfactant ("Surfynol 104PG-50" manufactured by Nissin Chemical Co., Ltd., propylene glycol solution of 2,4,7,9-tetramethyl-5-decyne-4,7-diol, active content: 50%, HLB value: 3.0 (calculated value))), 0.8 g of silicone-based surfactant ("KF-6011" manufactured by Shin-Etsu Chemical Co., Ltd., HLB value: 14.5 (catalog value), 2.4 g of 1 N sodium hydroxide aqueous solution, and ion-exchanged water in an amount to bring the total volume to 100 g was filtered through the membrane filter and the needle-free syringe, and thus a white ink W2 was obtained.

Examples 1 to 12 and Comparative Examples 1 and 2

Inkjet printing was performed using the combinations of printing media, pretreatment liquids, pretreatment liquid applied portions, and presence/absence of a drying step for the pretreatment liquids on the printing media shown in Table 3. The following evaluations were conducted.

(Step 1)

A printing evaluation apparatus (manufactured by Tritek Co., Ltd.) equipped with a plurality of inkjet heads ("KJ4B-HD06MHG-STDV" manufactured by Kyocera Corporation, piezoelectric type) was charged with each pretreatment liquid shown in Table 3 and the black ink Bk1 obtained in Production Example 5 as a colorant-containing ink, in an environment with a temperature of $25\pm1°C$ and a relative humidity of $30\pm5\%$.

The head voltage was set to 26 V, the frequency to 26 kHz, the head temperature to 32°C, the resolution to 1200 dpi, the pre-ejection flushing count to 200 shots, and the negative pressure to -4.0 kPa. The printing medium was fixed to the conveyor table under reduced pressure such that its longitudinal direction matched the conveying direction. The printing medium used was PET film FE2001 (manufactured by Futamura Chemical Co., Ltd., water absorption: 0 g/m$^2$) as a non-absorbency film or OK top coat paper (manufactured by Oji Paper Co., Ltd., water absorption: 4.9 g/m$^2$) as a coated paper.

In Examples 1 to 8 and 10, Step 1 was performed using a mirror image obtained by reversing the knockout text shown in FIG. 4-a such that a printed image of knockout text in 12Q font size constituted by a light image forming region (i) (printing duty of colorant-containing ink: 0%) and a dark image forming region (ii) (printing duty of colorant-containing ink: 100%) shown in FIG. 3 was formed when viewed from the opposite side of the printed image forming face of the non-absorbency film.

In Example 9 as well, a mirror image obtained by reversing the knockout text shown in FIG. 4-a was used, and thus the printed image formed in Example 9 was an image obtained by reversing the printed image formed in Examples 1 to 8 and 10.

In Step 1 of Examples 1 to 10, the pretreatment liquid was applied to an outer edge portion (iii) of a region (ii') to be the dark image forming region of the printing medium in FIG. 4-a in a solid fill (printing duty of pretreatment liquid: 100%) in an amount of droplets ejected of 1.5 pL. The outer edge portion (iii) of the region (ii') to be the dark image forming region in FIG. 4-a is a portion corresponding to the outer edge portion of the dark image forming region (ii) in FIG. 3, and belongs to the light image forming region (i) in FIG. 3. The outer edge portion (iii) of the region (ii') to be the dark image forming region in FIG. 4-a was set to a portion within 0.3 mm on the side away from the dark image forming region, starting from the boundary line between the dark image forming region and the light image forming region. A region (i') to be the light image forming region in FIG. 4-a corresponds to the light image forming region (i) in FIG. 3.

Furthermore, in Example 11, the printed image was a printed image of knockout text shown in FIG. 3 in 8Q font size formed in Examples 1 to 8 and 10, and the pretreatment liquid was applied to both the outer edge portion (iii) and an inner edge portion (iv) of the region (ii') to be the dark image forming region of the printing medium in FIG. 4-b in a solid fill (printing duty of pretreatment liquid: 100%) in an amount of droplets ejected of 1.5 pL. The outer edge portion (iii) of the region (ii') to be the dark image forming region in FIG. 4-b is a portion corresponding to the outer edge portion of the dark image forming region (ii) in FIG. 3, and belongs to the light image forming region (i) in FIG. 3. The outer edge portion (iii) of the region (ii') to be the dark image forming region in FIG. 4-b was set to a portion within 0.3 mm on the side away from the dark image forming region, starting from the boundary line between the dark image forming region and the light image forming region. The region (i') to be the light image forming region in FIG. 4-b corresponds to the light image forming region (i) in FIG. 3.

Furthermore, the inner edge portion (iv) of the region (ii') to be the dark image forming region in FIG. 4-b is a portion corresponding to the inner edge portion of the dark image forming region (ii) in FIG. 3, and belongs to the dark image forming region (ii) in FIG. 3. The inner edge portion (iv) of the region (ii') to be the dark image forming region in FIG. 4-b was set to a portion within 0.3 mm on the side away from the light image forming region, starting from a boundary line between the dark image forming region and the light image forming region.

Furthermore, in Example 12, the printed image was a printed image of knockout text shown in FIG. 3 in 8Q font size formed in Examples 1 to 8 and 10, the pretreatment liquid applied portions and the amount of droplets ejected were as in Examples 1 to 10, and the pretreatment liquid was applied to the printing medium in a solid fill (printing duty of pretreatment liquid: 100%).

In Comparative Example 1, the pretreatment liquid was applied to the entire face of the printing medium in a solid fill (printing duty of pretreatment liquid: 100%) in an amount of droplets ejected of 1.5 pL. In Comparative Example 2, the pretreatment liquid was not applied to the printing medium.

After applying the pretreatment liquid, as a drying step, the temperature of the face of the printing medium to which the pretreatment liquid was applied was maintained at 100°C for 1.5 seconds using warm air to dry the pretreatment liquid. At this time, the temperature of the printing medium was determined using a non-contact thermometer. In Example 10, after applying the pretreatment liquid, the aforementioned drying step was not performed, and the printing medium was allowed to stand for 3 seconds in an environment with a temperature of 25±1°C and a relative humidity of 30±5%.

(Step 2)

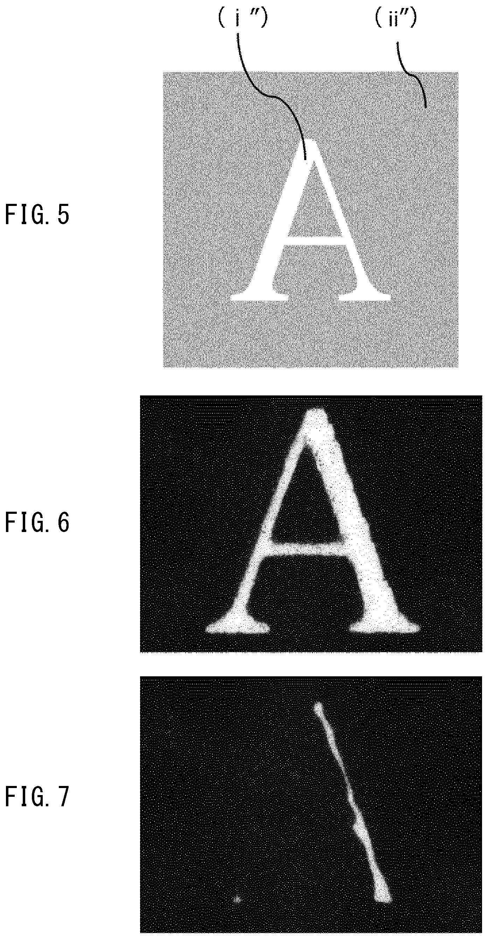

Using an inkjet head of the apparatus used in Step 1 charged with the black ink Bk1 obtained in Production Example 5, the black ink was applied at a printing duty of 100% in an amount of droplets ejected of 2 pL to the region (ii") to be the dark image forming region on the face having the pretreatment liquid applied portion of the printing medium obtained in Step 1 such that the region (i") to be the light image forming region in FIG. 5 matched the region (i') to be the light image forming region in FIG. 4-a or 4-b used in Step 1.

In Comparative Example 2, the black ink was applied at a printing duty of 100% in an amount of droplets ejected of 2 pL to the region (ii") to be the dark image forming region of the printing medium in FIG. 5.

In FIG. 5, the region (ii") to be the dark image forming region, to which the colorant-containing ink was applied, corresponds to the dark image forming region (ii) in FIG. 3.

(Step 3)

The printing apparatus as in Step 1 was charged with the white ink W2 obtained in Production Example 7, and the white ink was applied at a printing duty of 100% in an amount of droplets ejected of 5 pL to the entire face to which the black ink was applied of the printing medium to which the black ink was applied, obtained in Step 2. In Example 9, Step 3 was not performed, and the white ink was not applied.

FIGS. 6 and 7 respectively show photographs of printed images of knockout text obtained in Example 1 and Comparative Example 2. The photographs in FIGS. 6 and 7 were captured from the opposite side of the printed image forming face of the non-absorbency film.

Example 13

Printing was performed in the same manner as that of Example 1, except that the printed image was changed to a barcode.

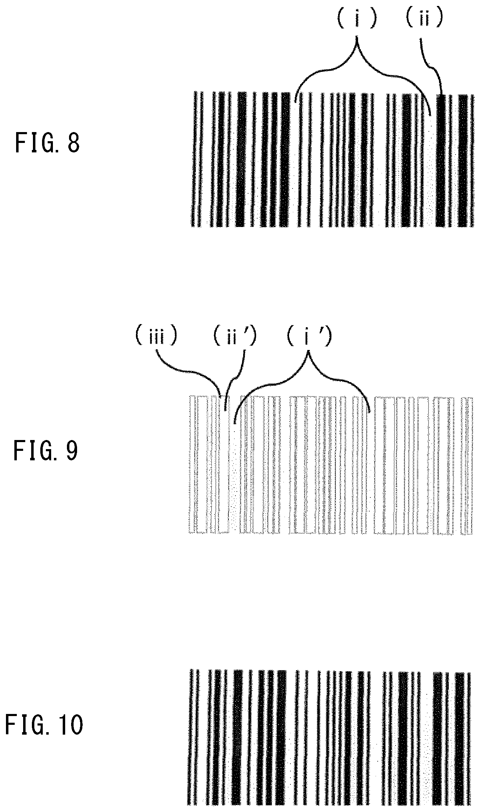

In Example 13, Step 1 was performed using a mirror image obtained by reversing a barcode shown in FIG. 9 such that a printed image of a barcode constituted by a light image forming region (i) (printing duty of colorant-containing ink: 0%) and a dark image forming region (ii) (printing duty of colorant-containing ink: 100%) shown in FIG. 8 was formed when viewed from the opposite side of the printed image forming face of the non-absorbency film.

In Step 1, the pretreatment liquid was applied to a portion shown as the outer edge portion (iii) of the region (ii') to be the dark image forming region of the printing medium in FIG. 9 in a solid fill (printing duty of pretreatment liquid: 100%) in an amount of droplets ejected of 1.5 pL. As a drying step, the temperature of the face of the printing medium to which the pretreatment liquid was applied was maintained at 100°C for 1.5 seconds using warm air to dry the pretreatment liquid. At this time, the temperature of the printing medium was determined using a non-contact thermometer.

Then, in Step 2, using an inkjet head of the apparatus used in Step 1 charged with the black ink Bk1 obtained in Production Example 5, the black ink was applied at a printing duty of 100% in an amount of droplets ejected of 2 pL to the region (ii") to be the dark image forming region (not shown) on the face having the pretreatment liquid applied portion of the printing medium obtained in Step 1 such that the region (i") to be the light image forming region (not shown) matched the region (i') to be the light image forming region in FIG. 9 used in Step 1. Furthermore, as Step 3, the printing apparatus as in Step 1 was charged with the white ink W2 obtained in Production Example 7, and the white ink was applied at a printing duty of 100% in an amount of droplets ejected of 5 pL to the entire face to which the black ink was applied of the printing medium to which the black ink was applied, obtained in Step 2.

In FIG. 9, the outer edge portion (iii) of the region (ii') to be the dark image forming region is a portion corresponding to the outer edge portion of the dark image forming region (ii) in FIG. 8, and belongs to the light image forming region (i) in FIG. 8.

FIG. 10 shows a photograph of a printed image of a barcode obtained in Example 13. The photograph in FIG. 10 was captured from the opposite side of the printed image forming face of the non-absorbency film.

<Evaluation of Streak Occurrence>

The black ink regions of the obtained printed materials were observed, and streaks were evaluated visually.

(Evaluation Criteria)

4: No streaks, uniform and excellent.
3: Slight streaks are visible.
2: Streaks are visible but not at a level considered problematic for practical use.
1: Streaks are clearly visible and problematic for practical use.

For practical use, a rating of 2 or higher based on the above criteria is acceptable.

<Evaluation of Clarity of Printed Image (Sharpness of Knockout Text and Sharpness of Barcode Edge Portions)>

The knockout text or the barcode portions of the obtained printed materials were observed, and the clarity of the printed image (the sharpness of the knockout text or the sharpness of the barcode edge portions) was evaluated visually.

(Evaluation Criteria)

4: Knockout text or barcode is clearly identifiable.
3: Knockout text or barcode is smudged but can be identified.
2: Knockout text or barcode is smudged and difficult to identify, but not at a level considered problematic for practical use.
1: Knockout text or barcode is obscured by black ink and cannot be recognized.

For practical use, a rating of 2 or higher based on the above criteria is acceptable.

[Table 3]

Table 3

| | | Example | | | | | | | | | | | | | Comparative Example | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 1 | 2 |
| Step 1 | Type of printing medium | Non-absorbency film | Non-absorbency film | Non-absorbency film | Non-absorbency film | Non-absorbency film | Non-absorbency film | Non-absorbency film | Non-absorbency film | Coated paper | Non-absorbency film | Non-absorbency film | Non-absorbency film | Non-absorbency film | Non-absorbency film | Non-absorbency film |
| | Type of pretreatment liquid | 1 | 2 | 3 | 4 | 5 | 6 | 7 | 8 | 4 | 4 | 4 | 4 | 4 | 5 | - |
| | Pretreatment liquid applied portion *1 | P1 | P1 | P1 | P1 | P1 | P1 | P1 | P1 | P1 | P1 | P2 | P1 | P1 | PC1 | - |
| | Drying step of pretreatment liquid on printing medium | Performed | Performed | Performed | Performed | Performed | Performed | Performed | Performed | Performed | Not performed | Performed | Performed | Performed | Performed | - |
| Step 2 | Type of colorant-containing ink | Bk1 | Bk1 | Bk1 | Bk1 | Bk1 | Bk1 | Bk1 | Bk1 | Bk1 | Bk1 | Bk1 | Bk1 | Bk1 | Bk1 | Bk1 |
| | Colorant-containing ink applied portion *2 | R1 | R1 | R1 | R1 | R1 | R1 | R1 | R1 | R1 | R1 | R1 | R1 | R1 | R1 | R1 |
| Step 3 | Presence/absence of white ink application | Applied (after Step 2) | Applied (after Step 2) | Applied (after Step 2) | Applied (after Step 2) | Applied (after Step 2) | Applied (after Step 2) | Applied (after Step 2) | Applied (after Step 2) | Not applied | Applied (after Step 2) | Applied (after Step 2) | Applied (after Step 2) | Applied (after Step 2) | Applied (after Step 2) | Applied (after Step 2) |
| | Type of white ink | W2 | W2 | W2 | W2 | W2 | W2 | W2 | W2 | - | W2 | W2 | W2 | W2 | W2 | W2 |

36

EP 4 768 265 A1

(continued)

| | | Example | | | | | | | | | | | | | Comparative Example | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 1 | 2 |
| Printed image of printed material | Printing duty (%) of dark image forming region | 100 | 100 | 100 | 100 | 100 | 100 | 100 | 100 | 100 | 100 | 100 | 100 | 100 | 100 | 100 |
| | Printing duty (%) of Light image forming region | 0 | 0 | 0 | 0 | 0 | 0 | 0 | 0 | 0 | 0 | 0 | 0 | 0 | 0 | 6 |
| | Type of printed image | Knockout text | Knockout text | Knockout text | Knockout text | Knockout text | Knockout text | Knockout text | Knockout text | Knockout text | Knockout text | Knockout text | Knockout text | Barcode | Knockout text | Knockout text |
| | Text size (Q font size) | 12Q | 12Q | 12Q | 12Q | 12Q | 12Q | 12Q | 12Q | 12Q | 12Q | 8Q | 8Q | - | 12Q | 12Q |
| Evaluation results | Streak occurrence | 4 | 4 | 4 | 4 | 4 | 4 | 4 | 4 | 4 | 4 | 4 | 4 | 4 | 1 | 4 |
| | Clarity of printed image (sharpness of knockout text or barcode edge portions) | 4 | 4 | 4 | 4 | 3 | 3 | 3 | 3 | 4 | 2 | 4 | 3 | 4 | 3 | 1 |

*1: The applied portion P1 is the outer edge portion of the region to be the dark image forming region. The applied portion P2 is the outer edge portion of the region to be the dark image forming region and the inner edge portion of the region to be the dark image forming region. The applied portion PC 1 is the entire face of the printing medium.

*2: The applied portion R1 is the region to be the dark image forming region.

It is seen from Table 3 that the examples provided printed materials in which the streak occurrence is suppressed and excellent clarity of a printed image (excellent sharpness in knockout text or barcodes) is achieved, compared with the comparative examples.

Industrial Applicability

According to the present invention, it is possible to obtain a printed material in which the streak occurrence is suppressed and excellent clarity of a printed image containing a dark image forming region and a light image forming region is achieved even in line-head type inkjet printing using a low-absorbency printing medium.

List of Reference Numerals

(i) Light image forming region
(ii) Dark image forming region
(i') Region to be light image forming region
(ii') Region to be dark image forming region
(iii) Outer edge portion of region (ii') to be dark image forming region
(iv) Inner edge portion of region (ii') to be dark image forming region
(i") Region to be light image forming region
(ii") Region to be dark image forming region

**Claims**

1. An inkjet printing method for forming, on a printing medium, a printed image containing a dark image forming region and a light image forming region, wherein a printing duty of a colorant-containing ink in the dark image forming region is larger than that in the light image forming region, comprising:

   Step 1: a step of applying a pretreatment liquid to an outer edge portion of a region to be the dark image forming region, thereby obtaining a printing medium having a pretreatment liquid applied portion; and
   Step 2: a step of applying, using a line-head type inkjet method, the colorant-containing ink to the region to be the dark image forming region on a face having the pretreatment liquid applied portion of the printing medium obtained in Step 1.

2. The inkjet printing method according to claim 1, wherein the printing medium is a low-absorbency printing medium.

3. The inkjet printing method according to claim 1 or 2, wherein Step 1 includes a step of maintaining the printing medium to which the pretreatment liquid has been applied, at 25°C or higher.

4. The inkjet printing method according to any one of claims 1 to 3, wherein Step 1 includes a step of drying the printing medium to which the pretreatment liquid has been applied.

5. The inkjet printing method according to any one of claims 1 to 4, wherein Step 1 includes a step of solidifying the pretreatment liquid applied portion.

6. The inkjet printing method according to any one of claims 1 to 5, wherein the pretreatment liquid contains one or more selected from the group consisting of an aggregative compound (A1) and a hydrophobic compound (A2).

7. The inkjet printing method according to claim 6, wherein the aggregative compound (A1) is one or more selected from the group consisting of a metal salt, an organic acid or a salt thereof, and a cationic resin.

8. The inkjet printing method according to claim 6, wherein the hydrophobic compound (A2) is one or more selected from the group consisting of an anionic resin and a hydrophobic surfactant.

9. The inkjet printing method according to any one of claims 1 to 8, wherein the outer edge portion of the region to be the dark image forming region is a portion within a range of 0.01 mm or more and 1 mm or less on the side away from the dark image forming region, starting from a boundary line between the dark image forming region and the light image forming region.

10. The inkjet printing method according to any one of claims 1 to 9, wherein Step 1 includes applying the pretreatment liquid further to an inner edge portion of the region to be the dark image forming region.

11. The inkjet printing method according to claim 10, wherein the inner edge portion of the region to be the dark image forming region is a portion within a range of 0.01 mm or more and 1 mm or less on the side away from the light image forming region, starting from a boundary line between the dark image forming region and the light image forming region.

12. The inkjet printing method according to any one of claims 1 to 11, wherein a difference between the printing duty of the colorant-containing ink in the dark image forming region and that in the light image forming region is 50% or more.

13. The inkjet printing method according to any one of claims 1 to 12, wherein the printing duty of the colorant-containing ink in the light image forming region is 0%.

14. The inkjet printing method according to any one of claims 1 to 13, wherein the printed image is a knockout text image.

15. The inkjet printing method according to any one of claims 1 to 14, further comprising Step 3 of applying a white ink containing a white pigment to the printing medium or the face of the printing medium to which the colorant-containing ink has been applied, before Step 1 or after Step 2.

16. The inkjet printing method according to any one of claims 1 to 15, wherein the printing duty of the colorant-containing ink in the light image forming region is more than 0%, and in Step 1, the pretreatment liquid is applied not only to the outer edge portion of the region to be the dark image forming region but also to a portion to which the colorant-containing ink is not applied in a region to be the light image forming region.

17. An inkjet printing apparatus for use in the inkjet printing method according to any one of claims 1 to 16, comprising:

    an inkjet head charged with the pretreatment liquid; and
    an inkjet head charged with the colorant-containing ink.

18. An inkjet printing ink set for use in the inkjet printing method according to any one of claims 1 to 16, comprising:

    the pretreatment liquid; and
    the colorant-containing ink.

19. A printed material producing method for forming, on a printing medium, a printed image containing a dark image forming region and a light image forming region, wherein a printing duty of a colorant-containing ink in the dark image forming region is larger than that in the light image forming region, comprising:

    Step 1: a step of applying a pretreatment liquid to an outer edge portion of a region to be the dark image forming region, thereby obtaining a printing medium having a pretreatment liquid applied portion; and
    Step 2: a step of applying, using a line-head type inkjet method, the colorant-containing ink to the region to be the dark image forming region on a face having the pretreatment liquid applied portion of the printing medium obtained in Step 1.

Dark image forming region

Boundary line between dark image forming
region and light image forming region

Outer edge portion

Light image
forming region

## FIG. 1

Dark image forming region

Boundary line between dark image forming
region and light image forming region

Inner edge portion

Outer edge portion

Light image
forming region

## FIG. 2

FIG. 3

FIG. 4-a

( iii )

( i ′ )

( ii ′ )

FIG. 4-b

( iii )

( i ′ )

( iv )

( ii ′ )

( i ″)         ( ii″)

FIG. 5

FIG. 6

FIG. 7

FIG. 8

(ⅰ) (ⅱ)

FIG. 9

(ⅲ) (ⅱ′) (ⅰ′)

FIG. 10

## INTERNATIONAL SEARCH REPORT

| International application No. |
|---|
| **PCT/JP2024/029746** |

| A. | CLASSIFICATION OF SUBJECT MATTER |
|---|---|

*B41M 5/00*(2006.01)i; *B41J 2/01*(2006.01)i; *B41J 2/21*(2006.01)i; *C09D 11/34*(2014.01)i
FI:   B41M5/00 132; B41M5/00 110; B41M5/00 100; B41J2/01 123; C09D11/34; B41J2/21

According to International Patent Classification (IPC) or to both national classification and IPC

| B. | FIELDS SEARCHED |
|---|---|

Minimum documentation searched (classification system followed by classification symbols)

B41M5/00; B41J2/01; B41J2/21; C09D11/34

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-178428 A (KONICA MINOLTA, INC.) 18 November 2021 (2021-11-18) paragraphs [0033]-[0197], fig. 1-7 | 1-3, 6-14, 16-19 |
| X | WO 2018/092439 A1 (SHOWA ALUMINUM KAN KK) 24 May 2018 (2018-05-24) paragraphs [0016]-[0087], fig. 1-11 | 1-5, 9-15, 17-19 |
| X | JP 2018-51991 A (SEIKO EPSON CORPORATION) 05 April 2018 (2018-04-05) paragraphs [0013]-[0038], fig. 1-7 | 1-3, 9-14, 17-19 |
| X | JP 2011-252029 A (BROTHER KOGYO KABUSHIKI KAISHA) 15 December 2011 (2011-12-15) paragraphs [0009]-[0077], fig. 1, 2 | 1-3, 6-14, 17-19 |
| X | JP 2007-21886 A (FUJIFILM HOLDINGS CORP.) 01 February 2007 (2007-02-01) paragraphs [0037]-[0154], fig. 1-10 | 1-3, 6-14, 17-19 |

| ☐ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 October 2024** | **29 October 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

International application No.

**PCT/JP2024/029746**

| Patent document cited in search report | | | Publication date (day/month/year) | Patent family member(s) | | | Publication date (day/month/year) |
|---|---|---|---|---|---|---|---|
| JP | 2021-178428 | A | 18 November 2021 | US | 2021/0354476 | A1 | |
| | | | | paragraphs [0040]-[0205], fig. 1-7 | | | |
| | | | | EP | 003915797 | A1 | |
| | | | | CN | 113650419 | A | |
| WO | 2018/092439 | A1 | 24 May 2018 | (Family: none) | | | |
| JP | 2018-51991 | A | 05 April 2018 | US | 2018/0086098 | A1 | |
| | | | | paragraphs [0021]-[0051], fig. 1-7 | | | |
| | | | | CN | 107878057 | A | |
| JP | 2011-252029 | A | 15 December 2011 | US | 2011/0292117 | A1 | |
| | | | | paragraphs [0008]-[0085], fig. 1-2B | | | |
| | | | | EP | 002390286 | A1 | |
| JP | 2007-21886 | A | 01 February 2007 | US | 2007/0013759 | A1 | |
| | | | | paragraphs [0051]-[0169], fig. 1-10 | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018126972 A

- JP 2009196274 A

**Non-patent literature cited in the description**

- **TAKEHIKO FUJIMOTO**. New Introduction to Surfactants. Sanyo Chemical Industries, Ltd., 1992, 94-107